# EUROPEAN PATENT SPECIFICATION

(11) **EP 2 950 037 B1**
(45) Date of publication and mention of the grant of the patent: **27.07.2016**
(21) Application number: 15164891.2
(22) Date of filing: 23.04.2015
(51) Int. Cl.: G01B 5/00, G01B 11/00

(54) **THREE-DIMENSIONAL SHAPE MEASUREMENT APPARATUS**
VORRICHTUNG ZUR MESSUNG DREIDIMENSIONALER FORMEN
APPAREIL DE MESURE DE FORME TRIDIMENSIONNELLE

(30) Priority: 29.05.2014 JP 2014111032
(43) Date of publication of application: 02.12.2015
(73) Proprietor: Panasonic Intellectual Property Management Co., Ltd., Osaka-shi, Osaka 540-6207 (JP)
(72) Inventor: Araki, Takahisa, Osaka Osaka 540-6207 (JP); Funabashi, Takanori, Osaka Osaka 540-6207 (JP); Kawanishi, Tsutomu, Osaka Osaka 540-6207 (JP); Takeuchi, Hiroyuki, Osaka Osaka 540-6207 (JP)
(74) Representative: Vigand, Philippe

(56) References cited:
- JP-A- 2012 078 344
- US-A- 5 455 677
- US-B1- 6 539 642

## Description

### TECHNICAL FIELD

The present invention relates to a three-dimensional shape measurement apparatus which scans and measures a certain three-dimensional-shaped measuring object (for example, an aspherical lens used for a smart phone or the like) with high accuracy.

### BACKGROUND ART

An apparatus shown in Fig. 23 is disclosed in a non patent literature 1 below-mentioned. The apparatus has probe portion 201 disposed in a lower end of Z-axis driving shaft 220 of Z-axis driving device 200 having a Z-axis direction gravity compensation function, and measures the three-dimensional shape of measuring object 203 mounted on XY table 202.

In the apparatus, Z-axis driving shaft 220 of Z-axis driving device 200 is subjected to vacuum drawing by vacuum cylinder 204 in an upper portion of the Z-axis driving device and the dead weight of Z-axis driving shaft 220 is minimized so as to compensate the dead weight. Z-axis driving shaft 220 is driven in a Z-axis direction by the driving of an actuator which is constituted of piezoelectric transducer (PZT) 205 and voice coil motor 206 assembled to each other. Coil 207 of voice coil motor 206 is disposed in case-shaped yoke 208 which constitutes vacuum cylinder 204. Furthermore, magnet 209 is fixed to Z-axis driving shaft 220 at a position facing coil 207. In non-contact sealing portion 210 in an opening of vacuum cylinder 204, Z-axis driving shaft 220 is sealed movably in the Z-axis direction. A lower portion of Z-axis driving shaft 220 is supported by hydrostatic gas bearing 211.

A center portion of Z-axis driving device 200 which moves in the Z-axis direction is provided with a through-hole for allowing a laser beam to pass therethrough.. A distance between laser interferometer 212 and a reflecting mirror in an upper end of probe portion 201 is measured, thus, the three-dimensional shape of measuring object 203 can be measured.

### Non Patent Literature 1

"A newly developed three-dimensional profile scanner with nanometer spatial resolution" by H. Shinno, H. Yoshioka, T. Gokan, and H. Sawano; CIRP Annals-Manufacturing Technology Vol.59, No.1, (2010), pp.525-528

### SUMMARY OF THE INVENTION

The present invention provides a three-dimensional shape measurement apparatus in which rotational rigidity of a Z-axis driving shaft is increased, bending of the Z-axis driving shaft (in other words, an air-slider hollow shaft) due to thermal expansion can be suppressed, and which can measure a three-dimensional shape with high accuracy.

A three-dimensional shape measurement apparatus according to an aspect of the invention has an air-slider outer frame, an air-slider hollow shaft, two support arms, two driving portions, and two support portions. The air-slider hollow shaft is provided with a focus optical system on an upper end thereof and a probe portion on a lower end thereof. The air-slider hollow shaft is provided with a through-hole to form an optical path connecting the focus optical system and the probe portion. In addition, the air-slider hollow shaft has a central axis matched to a central axis of the air-slider outer frame. Central axes of the focus optical system and the probe portion are arranged on the central axis of the air-slider hollow shaft. The air-slider hollow shaft can move along an axial direction in the air-slider outer frame. The two support arms protrude from both sides of the air-slider hollow shaft in a lateral direction symmetric with respect to the central axis of the air-slider hollow shaft, at vertical positions corresponding to an integration gravity center of the focus optical system, the probe portion, and the air-slider hollow shaft. The two driving portions are located, in the support arms, at positions in the vicinity of the air-slider hollow shaft, symmetric with respect to the central axis of the air-slider hollow shaft. The driving portions can drive, in the axial direction with respect to the air-slider outer frame, the air-slider hollow shaft with aid of the two support arms. The two support portions are disposed, associating with the support arms, symmetric with respect to the central axis of the air-slider hollow shaft. The support portions support dead weights of the air-slider hollow shaft, the probe portion, the focus optical system, and the two driving portions.

According to the configuration described above, when the air-slider hollow shaft is driven in the up-down direction, a rotational moment is not applied to the air-slider hollow shaft. In addition, a bending force is not applied to the optical system of the air-slider hollow shaft. Thus, the rotational rigidity of the Z-axis driving shaft (that is, the air-slider hollow shaft) is increased and bending of the Z-axis driving shaft due to thermal expansion can be prevented. As a result, it is possible to measure a three-dimensional shape with high accuracy.

### BRIEF DESCRIPTION OF DRAWINGS

Fig. 1 is a schematic view illustrating a configuration of the entirety of a three-dimensional shape measurement apparatus according to an embodiment of the present invention.
Fig. 2 is a perspective view illustrating a configuration of a Z-axis stage portion of the three-dimensional shape measurement apparatus illustrated in Fig. 1.
Fig. 3 is a longitudinal cross-sectional view illustrating a configuration of the Z-axis stage portion illustrated in Fig. 2.
Fig. 4 is a longitudinal cross-sectional view illustrating a schematic configuration of an optical system of the Z-axis stage portion illustrated in Fig. 2, in a state where an air-slider outer frame is removed.
Fig. 5 is an enlarged explanatory view illustrating a schematic configuration of an optical system which is disposed in an upper end portion of an air-slider hollow shaft of the three-dimensional shape measurement apparatus illustrated in Fig. 1.
Fig. 6 is an enlarged explanatory view illustrating a schematic configuration of an optical system which is disposed in a lower end portion of the air-slider hollow shaft of the three-dimensional shape measurement apparatus illustrated in Fig. 1.
Fig. 7 is a longitudinal cross-sectional view illustrating a schematic configuration of the Z-axis stage portion illustrated in Fig. 2 in a state where a part of the air-slider outer frame is removed.
Fig. 8A is a schematic plan view of the Z-axis stage portion illustrated in Fig. 2.
Fig. 8B is an enlarged plan view of a VIII portion of Fig. 8A.
Fig. 8C is a schematic plan view of a Z-axis stage portion according to a modification example of the embodiment of the present invention.
Fig. 9 is an enlarged plan view of the Z-axis stage portion illustrated in Fig. 8C.
Fig. 10 is an enlarged perspective view in the vicinity of a support portion on one side of the Z-axis stage portion illustrated in Fig. 8C.
Fig. 11 is an enlarged front view in the vicinity of a support portion on one side of the Z-axis stage portion illustrated in Fig. 8C.
Fig. 12A is an explanatory view illustrating a state of an inclination measurement optical system when bending does not occur in the air-slider hollow shaft of the three-dimensional shape measurement apparatus illustrated in Fig. 1.
Fig. 12B is an explanatory view illustrating a state of the inclination measurement optical system when bending occurs in the air-slider hollow shaft of the three-dimensional shape measurement apparatus illustrated in Fig. 1.
Fig. 13A is an explanatory view illustrating a reference sphere as a measurement target of an actual measurement example.
Fig. 13B is a graph illustrating a difference between measurement data and values by a design formula, when, in an actual measurement example, an X-axis reciprocal scanning measurement is performed on the reference sphere which has a radius of 5.55 mm and is illustrated in Fig. 13A, from -70-degree inclination to +70-degree inclination, at a scanning speed of 1.2 mm/sec, using a probe portion of a three-dimensional shape measurement apparatus of the related art.
Fig. 13C is a graph illustrating a difference between measurement data and values by a design formula, when, in an actual measurement example, an X-axis reciprocal scanning measurement is performed on the reference sphere which has a radius of 5.55 mm and is illustrated in Fig. 13A, from -70-degree inclination to +70-degree inclination, at a scanning speed of 1.2 mm/sec, using a probe portion of the three-dimensional shape measurement apparatus according to the embodiment of the present invention.
Fig. 14A is an explanatory view illustrating a reference sphere as a measurement target of an actual measurement example.
Fig 14B is a graph illustrating a difference between measurement data and values by the design formula, when, in the actual measurement example, a Y-axis reciprocal scanning measurement is performed on the reference sphere which has a radius of 5.55 mm and is illustrated in Fig. 14A, from -70-degree inclination to +70-degree inclination, at a scanning speed of 1.2 mm/sec, using the probe portion of the three-dimensional shape measurement apparatus of the related art.
Fig 14C is a graph illustrating a difference between measurement data and values by the design formula, when, in the actual measurement example, the Y-axis reciprocal scanning measurement is performed on the reference sphere which has a radius of 5.55 mm and is illustrated in Fig. 14A, from -70-degree inclination to +70-degree inclination, at a scanning speed of 1.2 mm/sec, using the probe portion of the three-dimensional shape measurement apparatus according to the embodiment of the present invention.
Fig. 15 is an enlarged perspective view in the vicinity of a support portion on one side of the Z-axis stage portion according to a modification example of the embodiment of the present invention.
Fig. 16 is an enlarged front view in the vicinity of a support portion on one side of the Z-axis stage portion of Fig. 15.
Fig. 17 is an enlarged perspective view in the vicinity of a support portion on one side of the Z-axis stage portion according to another modification example of the embodiment of the present invention.
Fig. 18 is an enlarged front view in the vicinity of a support portion on one side of the Z-axis stage portion of Fig. 17.
Fig. 19 is a perspective view illustrating a configuration of the Z-axis stage portion according to still another modification example of the embodiment of the present invention.
Fig. 20 is a front view of the Z-axis stage portion of Fig. 19.
Fig. 21A is a longitudinal cross-sectional view of a Z-axis stage portion according to still another modification example of the embodiment of the present invention.
Fig. 21B is an enlarged longitudinal cross-sectional view in the vicinity of the support portion on the one side of the Z-axis stage portion of Fig. 21A.
Fig. 21C is an enlarged longitudinal cross-sectional view in the vicinity of a support portion on one side of a Z-axis stage portion according to still another modification example of the embodiment of the present invention.
Fig. 22 is a longitudinal cross-sectional view of a Z-axis stage portion according to still another modification example of the embodiment of the present invention.
Fig. 23 is a front view of an apparatus of the related art disclosed in the non patent literature 1.
Fig. 24A is an enlarged longitudinal cross-sectional view of the apparatus of the related art disclosed in the non patent literature 1.
Fig. 24B is an enlarged longitudinal cross-sectional view of the apparatus of the related art disclosed in the non patent literature 1, when a thermally expansion occurs.

### DESCRIPTION OF EMBODIMENTS

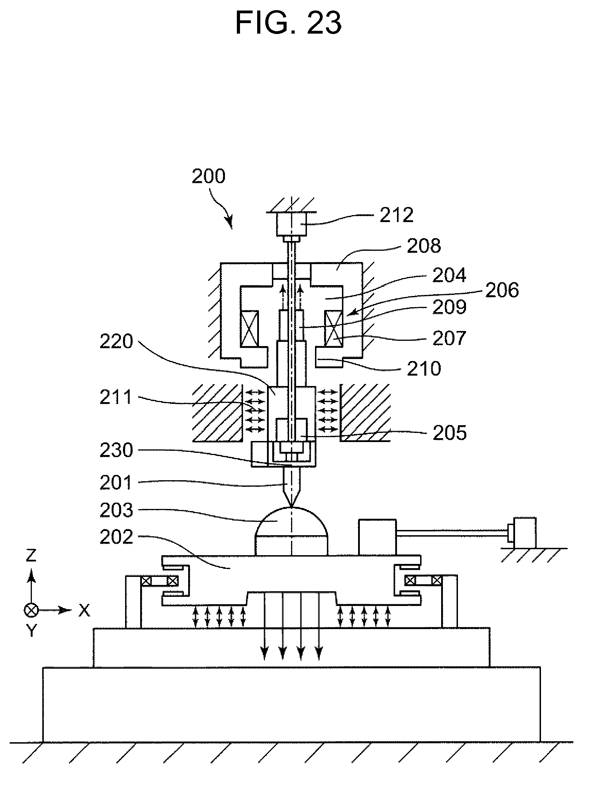

A problem in the three-dimensional shape measurement apparatus of the related art will be described prior to the description of an embodiment of the present invention. In Z-axis driving device 200 of a three-dimensional shape measurement apparatus illustrated in Fig. 23, Z-axis driving shaft 220 is supported by hydrostatic gas bearing 211 in a non-contact manner. However, the diameter of the Z-axis driving shaft 220 and the length of the hydrostatic gas bearing 211 in a vertical direction are approximately the same. In addition, the length of the entirety of the Z-axis driving shaft 220 in the vertical direction is longer than the diameter of the Z-axis driving shaft 220.

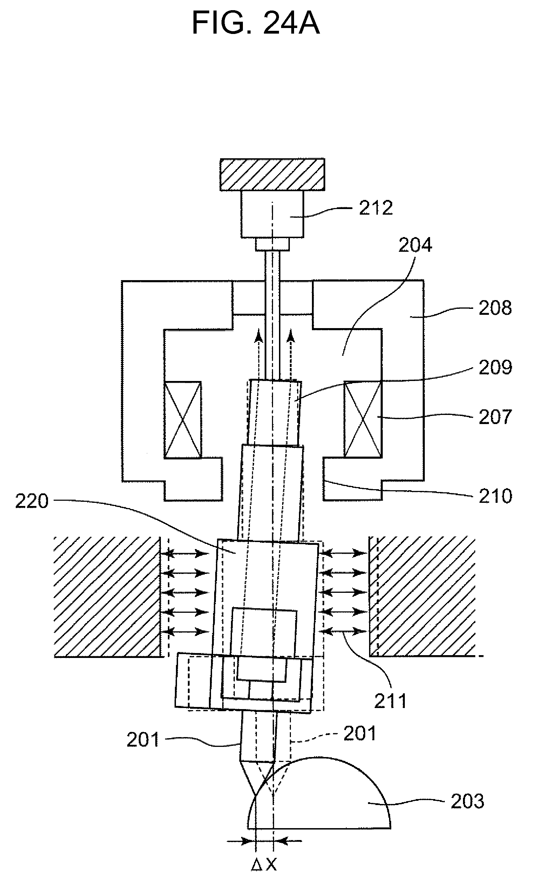

In the case of such a configuration, when a measuring object having a large inclination angle (which is set to the angle of 30 degrees to 70 degrees, for example) is measured and a force in a lateral direction is applied to a tip end of a probe, a rotational moment easily occurs (see Fig. 24A).

As a result, measurement error of ΔX occurs, as illustrated in Fig. 24A.

Thus, it is significantly difficult for the apparatus of the related art, in which the rotational rigidity of Z-axis driving shaft 220 is reduced, to perform measurement of the order of mm/s, which is required for a production line of a lens.

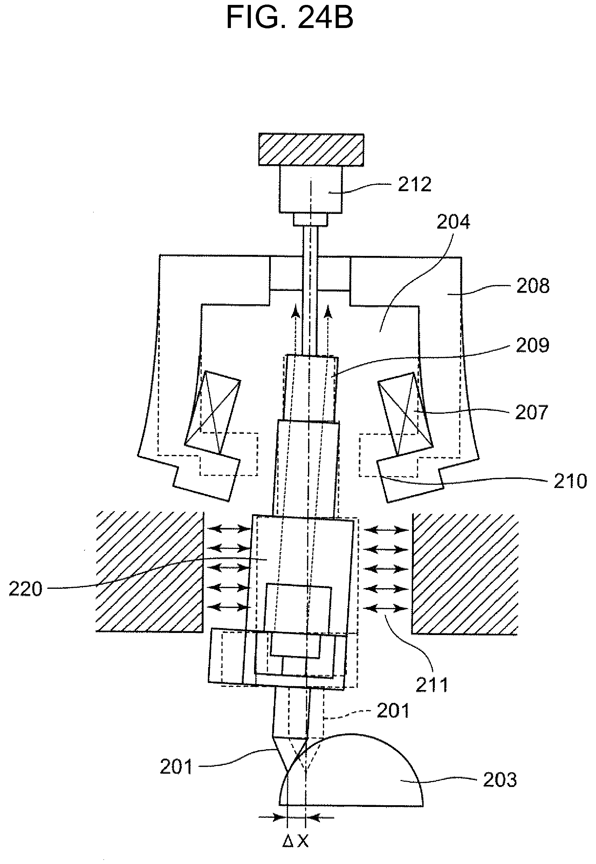

Furthermore, when current flows through coil 207 of a driving portion of Z-axis driving device 200, heat is generated in coil 207 by the current. Accordingly, yoke 208 is thermally expanded, and thus a gap of non-contact sealing portion 210 increases as illustrated in Fig. 24B. When the gap increases as described above, it is easy for air to be inserted through the gap. Thus, it is difficult to hold the driving portion of Z-axis driving device 200 by only vacuum drawing. Therefore, a large amount of current flows through coil 207, so that a force which pulls Z-axis driving device 200 upward acts on Z-axis driving shaft 220. Accordingly, in non-contact sealing portion 210 and hydrostatic gas bearing 211 with respect to the Z-axis driving shaft 220, axial displacement (which is displacement of the level of several micrometers) occurs in Z-axis driving shaft 220 (see the state illustrated in Fig. 24B by the dotted line). Accordingly, Z-axis driving shaft 220 is bent to one side, and thus the axial displacement occurs in Z-axis driving shaft 220. Therefore, the rigidity of Z-axis driving shaft 220 is reduced. As a result, the rotational rigidity of the Z-axis driving shaft 220 is reduced, and thus it is easy for measurement error of ΔX to occur in the tip end of the probe portion at a large inclination angle (which is set to the angle of 30 degrees to 70 degrees). Thus, it is significantly difficult for the apparatus of the related art, in which the rotational rigidity of Z-axis driving shaft 220 is reduced due to thermal expansion, to perform measurement of the order of mm/s, which is required for a production line of a lens.

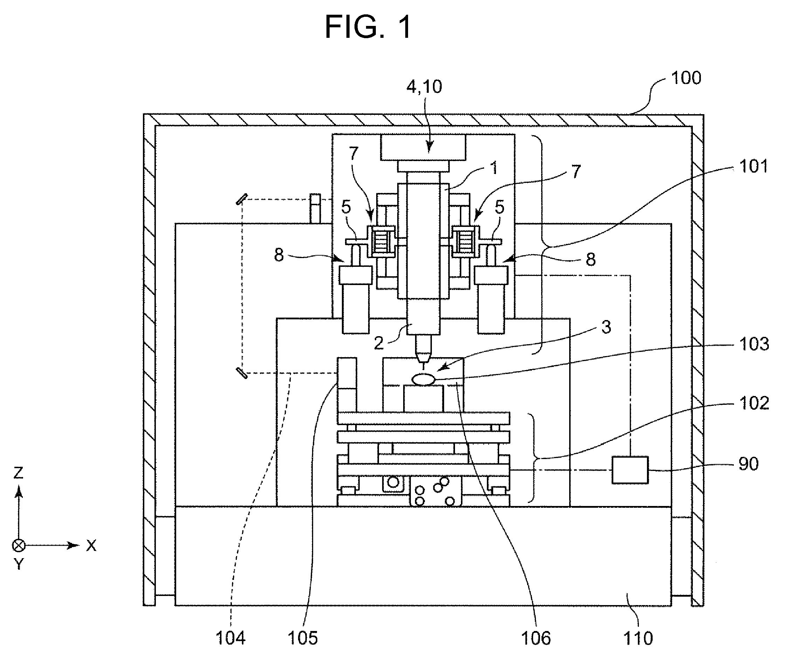

Hereinafter, three-dimensional shape measurement apparatus 100 according to the embodiment of the invention will be described in detail with reference to the accompanying drawings. The configuration of the entirety of three-dimensional shape measurement apparatus 100 is illustrated in Fig. 1.

Three-dimensional shape measurement apparatus 100 includes XY stage 102, Z-axis stage portion 101, and control portion 90. XY stage 102 is disposed on surface plate 110 in a state where XY stage 102 is movable in X and Y axes directions. XY stage 102 holds measuring object 103 , and thus XY stage 102 allows measuring object 103 to be able to move in the X and Y axes directions. Z-axis stage portion 101 is supported by surface plate 110 movably in the Z-axis direction, in other words, an up-down direction (that is, the vertical direction). The lower end of Z-axis stage portion 101 supports probe portion 3 which comes into contact with the measurement surface of measuring object 103 movably in the up-down direction. Control portion 90 is connected to focus optical system 4, XY stage 102, Z-axis stage portion 101, He-Ne laser device 64, and the like. Control portion 90 controls a three-dimensional-shape measuring operation by controlling the operations of the devices described above. In Fig. 1, a portion corresponding to a reference numeral 105 is an X-axis direction mirror, a portion corresponding to reference numeral 106 is a Y-axis direction mirror, and a portion corresponding to reference numeral 104 is a laser beam for measuring the length of the X axis. The three dimensional shape of measuring object 103 is measured as follows. Probe portion 3 comes into contact with measuring object 103 while measuring object 103 is being moved in the X-axis direction and the Y-axis direction by XY stage 102. Then, movement of probe portion 3 is detected by the optical system connected to Z-axis stage portion 101.

Accordingly, three-dimensional shape measurement apparatus 100 has XY stage 102 which moves the measurement surface in X and Y directions, and Z-axis stage portion 101 which moves probe portion 3 in a Z direction, and thus three-dimensional shape measurement apparatus 100 moves the relative position of the measurement surface of measuring object 103 with respect to probe portion 3 in X, Y and Z directions by XY stage 102 and Z-axis stage portion 101.

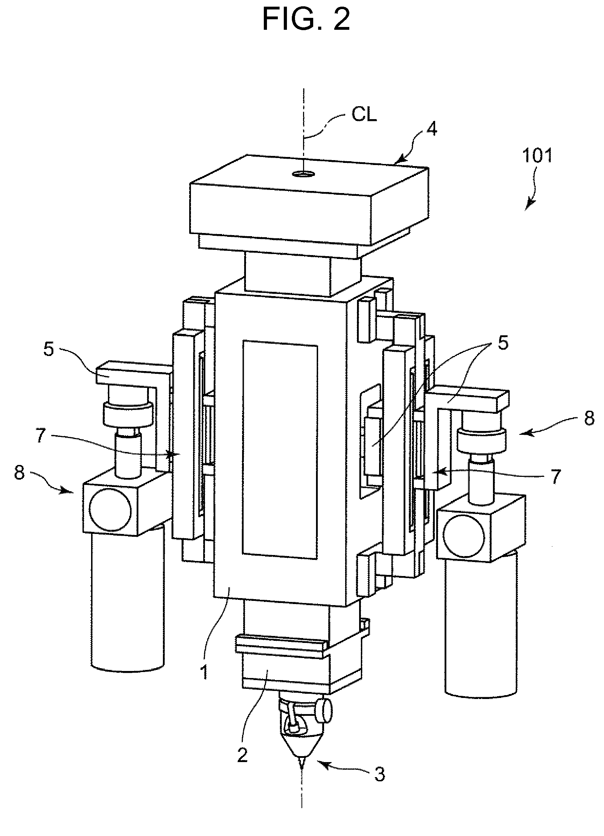

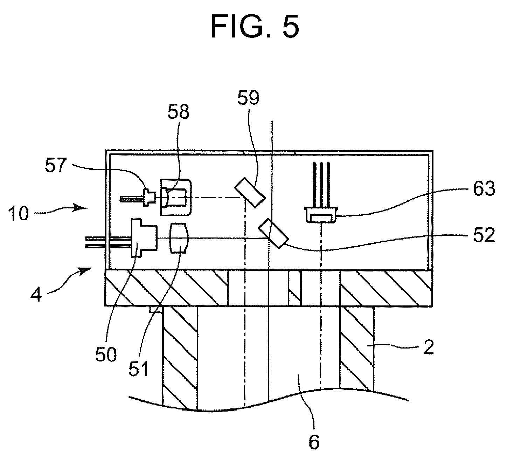

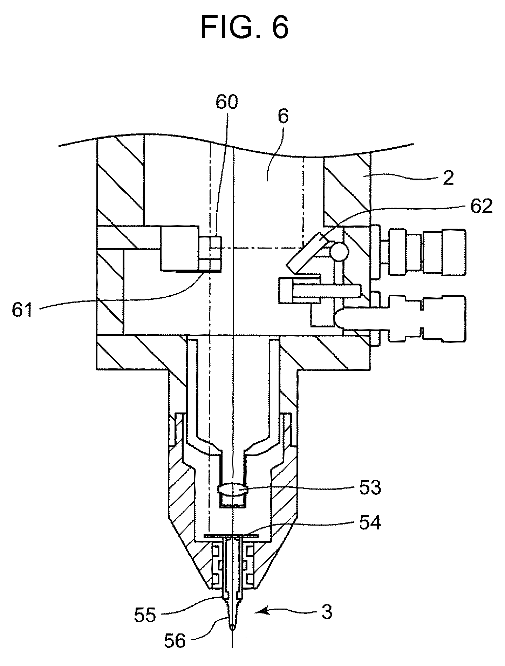

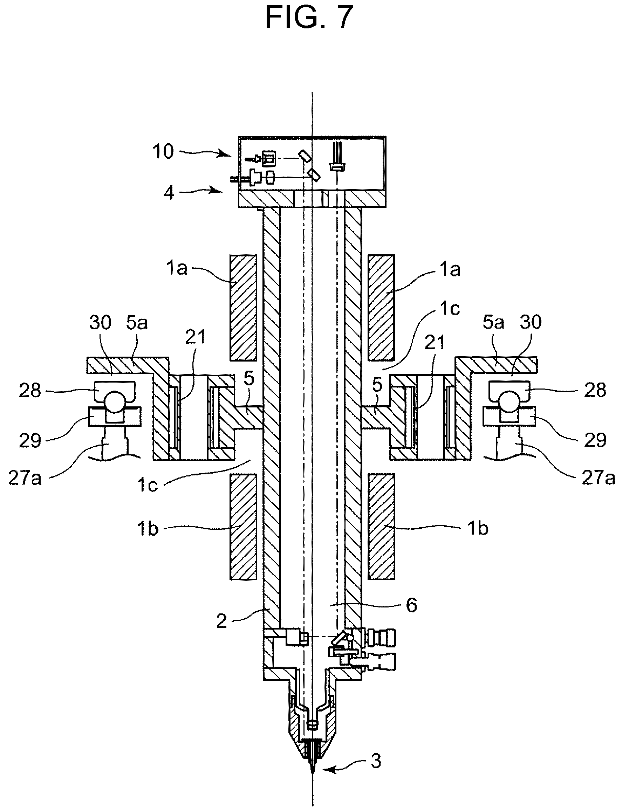

Z-axis stage portion 101 includes air-slider outer frame 1, air-slider hollow shaft 2, two support arms 5, two driving portions 7, two support portions 8, probe portion 3, focus optical system 4, and the like, as illustrated in Figs. 2 to 9.

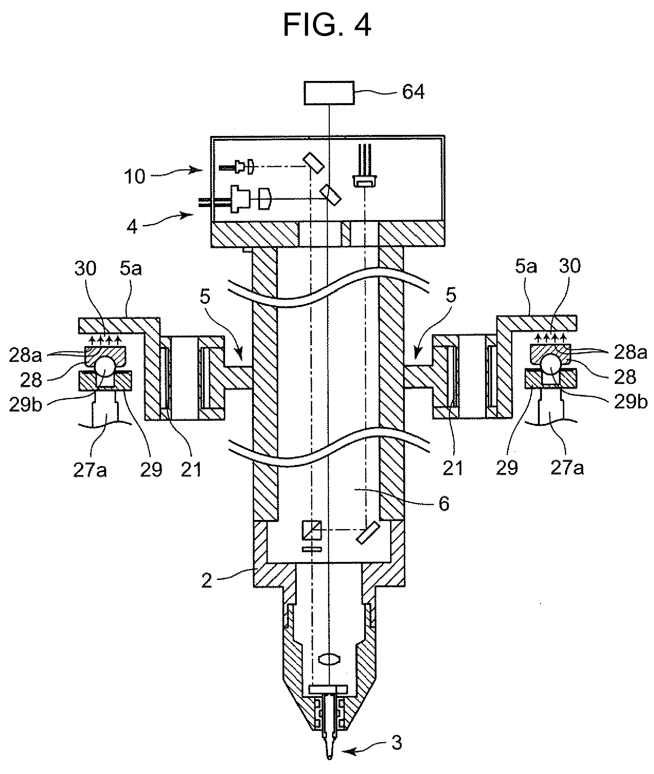

Focus optical system 4 has at least He-Ne laser device 64, and is provided in air-slider hollow shaft 2. Focus optical system 4 is constituted mainly of He-Ne laser device 64, focusing element 50, collimator lens 51, dichroic mirror 52, collimator lens 53, mirror 54, as illustrated in Figs. 4 to 6. Focusing element 50, collimator lens 51, and dichroic mirror 52 are disposed in the upper end of air-slider hollow shaft 2. Collimator lens 53 and mirror 54 are disposed in the lower end of air-slider hollow shaft 2. Mirror 54 is fixed to the upper end of stylus 56 which is supported by micro slider 55 of probe portion 3.

Furthermore, inclination measurement optical system 10 is also provided in air-slider hollow shaft 2, in a state where inclination measurement optical system 10 is installed in a space of an optical path of focus optical system 4. Inclination measurement optical system 10 is constituted of semiconductor laser device 57 for inclination measurement optical system, collimator lens 58, mirror 59, polarization beam splitter 60, quarter wave plate 61, mirror 54, inclination signal adjustment mirror 62, and light receiving element 63 for inclination measurement optical system. When micro slider 55 in a body tube of probe portion 3 is inclined, a light beam emitted from semiconductor laser device 57 for inclination measurement optical system is reflected by mirror 54 in the upper surface of micro slider 55, and thus a light receiving position in light receiving element 63 for inclination measurement optical system changes. The change is detected, thus, correction of inclination is performed.

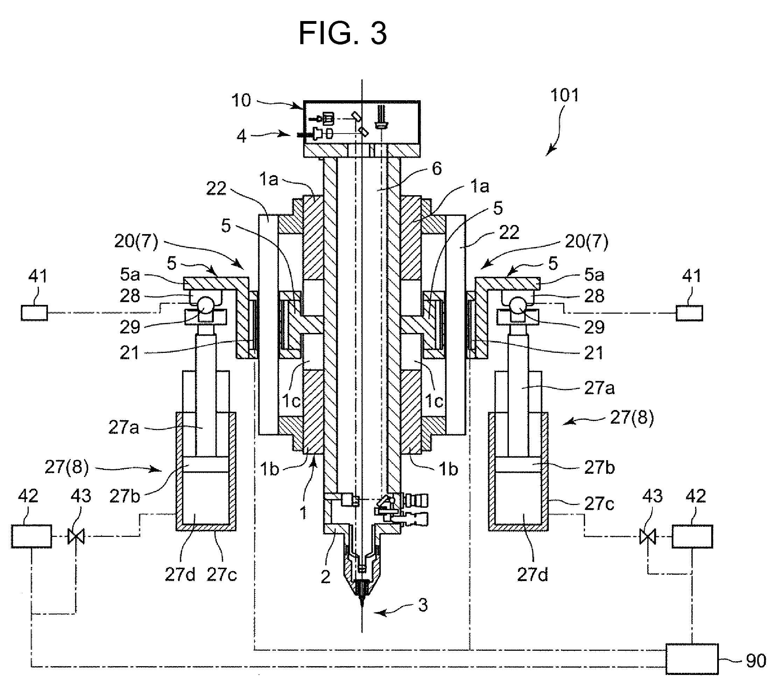

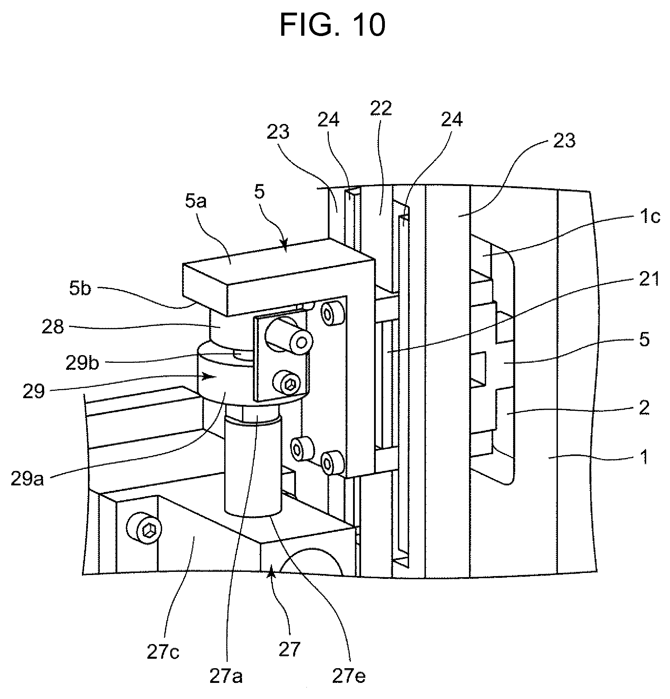

Focus optical system 4 and inclination measurement optical system 10 are disposed in air-slider hollow shaft 2, as described above. Accordingly, when bending of air-slider hollow shaft 2 occurs, error occurs in the optical system. However, in the case of Z-axis stage portion 101 of the embodiment, it is difficult for air-slider hollow shaft 2 to bend. As a result, it is possible to perform three-dimensional measurement with higher accuracy. Hereinafter, the configuration of Z-axis stage portion 101 will be described in detail with reference to Figs. 3 to 11.

Air-slider outer frame 1 is a rectangular-frame-shaped member of which the longitudinal side extends in the up-down direction, and supports air-slider hollow shaft 2 therein air-slider outer frame 1 movably in the up-down direction (that is, the Z-axis direction). Air-slider outer frame 1 is fixed to, for example, surface plate 110 of three-dimensional shape measurement apparatus 100.

Air-slider outer frame 1 is formed of upper support portion 1a and lower support portion 1b which are integrally connected to each other and have a rectangular frame shape, respectively. Upper support portion 1a is disposed on the upper side of air-slider outer frame 1. Lower support portion 1 b is disposed on the lower side of air-slider outer frame 1. In a portion between upper support portion 1 a and lower support portion 1 b, gap 1 c is provided in a lateral direction so that two support arms 5 can move in the up-down direction. Upper support portion 1 a and lower support portion 1b are formed of air bearing portions which support air-slider hollow shaft 2 in a non-contact manner so that upper support portion 1a and lower support portion 1 b can move in the up-down direction and cannot move in a lateral direction perpendicular to the up-down direction, with respect to air-slider hollow shaft 2. Meanwhile, it is preferable that a distance between the central position of upper support portion 1a in the up-down direction and the central position of lower support portion 1 b in the up-down direction is equal to or greater than twice the width of air-slider hollow shaft 2. According to the configuration described above, it is possible to more stably support air-slider hollow shaft 2 by upper support portion 1a and lower support portion 1b, and thus a rotational moment is prevented from being applied to air-slider hollow shaft 2. As a result, rotational movement of the tip end of the probe portion is prevented, and thus it is possible to prevent measurement error due to inclining of air-slider hollow shaft 2.

Air-slider hollow shaft 2 functions as the Z-axis driving shaft of Z-axis stage portion 101. Air-slider hollow shaft 2 is a rectangular-tube-shaped member of which the longitudinal side extends in the up-down direction. Focus optical system 4 is disposed in the upper end of air-slider hollow shaft 2 and probe portion 3 is disposed in the lower end thereof. Air-slider hollow shaft 2 is provided with through-hole 6 in the central portion thereof. An optical path connecting focus optical system 4 and reflecting mirror 13 in the upper end of probe portion 3 is formed in through-hole 6. For example, air-slider hollow shaft 2 is formed of a heat insulating material such as a ceramic. In a case where air-slider hollow shaft 2 is formed of a heat insulating material as described above, even when heat of coil 21 described below is transmitted to air-slider hollow shaft 2 through support arm 5, the heat is insulated by the heat insulating material. As a result, the heat is not transmitted to air-slider hollow shaft 2, and thus bending of air-slider hollow shaft 2 due to heat can be prevented.

Furthermore, the central axes of focus optical system 4 and probe portion 3 are arranged on the central axis of air-slider hollow shaft 2. Accordingly, even when air-slider hollow shaft 2 moves in the up-down direction, influence of a rotational moment on the optical system including focus optical system 4 and probe portion 3 is reduced. As a result, rotational movement of the tip end of the probe portion can be prevented, and thus it is possible to significantly prevent measurement error due to inclining of air-slider hollow shaft 2.

Base ends of two support arms 5 are respectively fixed to air-slider hollow shaft 2, at vertical positions corresponding to the integration gravity center of focus optical system 4, probe portion 3, and air-slider hollow shaft 2. Two support arms 5 protrude in the lateral direction of air-slider hollow shaft 2, from air-slider hollow shaft 2, at the vertical positions corresponding to the gravity center of air-slider hollow shaft 2. Two support arms 5 protrude from both sides of air-slider hollow shaft 2, in a direction in which support arms 5 are symmetrically with respect to and perpendicular to central axis CL of air-slider hollow shaft 2. Two support arms 5 are fixed to air-slider hollow shaft 2. A pair of support arms 5 are symmetrical with respect to central axis CL of air-slider hollow shaft 2. Each of support arms 5 may be formed of a rigid body, such as a metal. Alternatively, each of support arms 5 may be formed of, for example, a heat insulating material, such as a ceramic. In a case where support arm 5 is formed of a heat insulating material, as described above, even when heat of coil 21 described below is transmitted to support arm 5, the heat is insulated by the heat insulating material. As a result, bending of support arm 5 due to heat can be prevented and heat transfer to air-slider hollow shaft 2 can be prevented.

Driving portions 7 are disposed symmetrical with respect to central axis CL of air-slider hollow shaft 2, at positions in the vicinity of air-slider hollow shaft 2 of the respective support arms 5. Driving portions 7 allow air-slider hollow shaft 2 to be driven, with respect to air-slider outer frame 1, in an axial direction through two support arms 5. A pair of driving portions 7 are symmetrical with respect to central axis CL of air-slider hollow shaft 2. In this case, each of driving portions 7 is constituted of an actuator. The actuator includes linear motor 20, for example.

Linear motor 20 has coil 21 having a rectangular frame shape, center yoke 22 having a rectangular rod shape, outer yokes 23 each having a rectangular rod shape, and magnet 24 having a rectangular rod shape. Linear motor 20 is controlled by control portion 90. In each support arm 5, coil 21 formed in a rectangular frame shape is disposed at a position in the vicinity of air-slider hollow shaft 2. Support arm 5 is connected to a center portion of coil 21 in the axial direction. Center yoke 22 having a rectangular rod shape is fixed to air-slider outer frame 1 so that center yoke 22 extends in the up-down direction of air-slider outer frame 1. Outer yokes 23 having rectangular bodies are fixed to a front side and rear side of center yoke 22 so as to extend in the up-down direction of air-slider outer frame 1. A gap is provided between outer yokes 23, so that coil 21 can move in the gap along the up-down direction. Coil 21 is fitted to the outer side of center yoke 22 and can move in the up-down direction. When a predetermined drive current is applied to coil 21, air-slider hollow shaft 2 can move in the up-down direction, with respect to center yoke 22 on a fixed side. Furthermore, in coil 21, driving force generation portions 25 are a front portion and a rear portion in which outer yoke 23 is disposed. Linear motor 20 used in the embodiment is a movable coil type linear motor in which coil 21 of each linear motor 20 is supported by support arm 5 and magnet 24 is fixed to air-slider outer frame 1, as described above. Accordingly, the magnet having a relatively larger weight can be set to a fixed side and the coil having a relatively smaller weight can be set to a movable side. As a result, the weight of a movable portion of linear motor 20 can be reduced, and thus it is possible to also reduce a rotational moment.

The central axis between two driving axes (which are the central axes of coils 21) of two linear motors 20 is matched to the central axis passing through the gravity center of air-slider hollow shaft 2 (in other words, an offset is not provided between both the central axes). Accordingly, when control portion 90 drives two linear motors 20 synchronously to drive air-slider hollow shaft 2 in the up-down direction, a part of air-slider hollow shaft 2 corresponding to the position of the gravity center thereof is driven. As a result, a rotational moment is hard to be generated in air-slider hollow shaft 2.

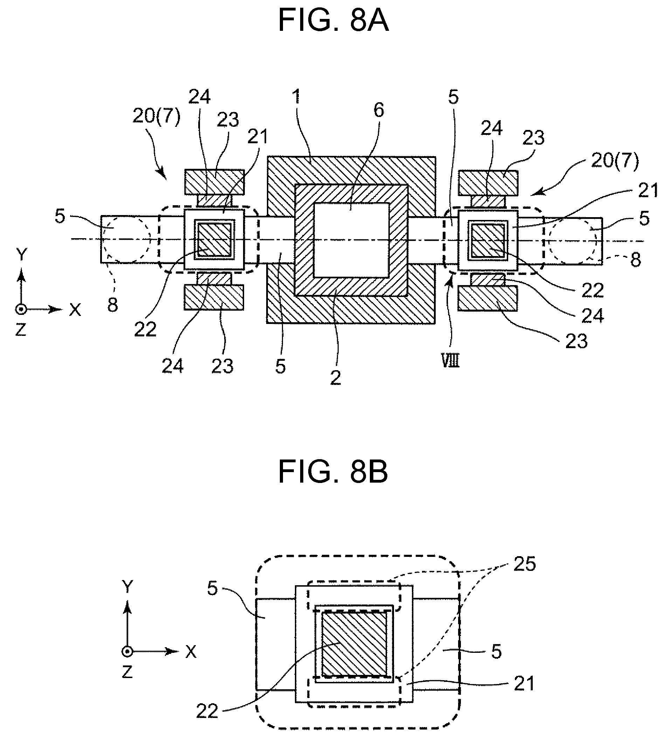

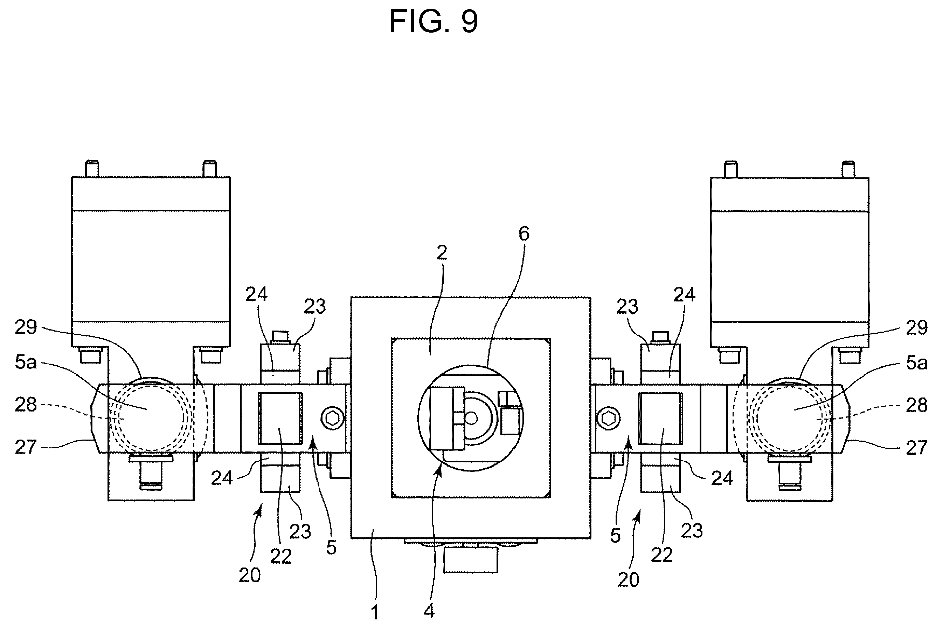

Two support portions 8 are disposed so as to support tip end portions of two support arms 5 which extend from two driving portions 7 to lateral-directional side. In other words, each of support portions 8 is disposed in the vicinity of driving portions 7 of each of support arms 5, away from air-slider hollow shaft 2,and symmetrical with respect to central axis CL of air-slider hollow shaft 2. Specifically, in the plan view as illustrated in Figs. 8A, 8B, and 9, the central axes (which are the central axes of, for example, rods 27a) of respective support portions 8, the central axes (which are the central axes of, for example, coils 21) of respective driving portions 7, and the central axis (in other words, the central axis of air-slider outer frame 1) of air-slider hollow shaft 2 are arranged on one straight line. Furthermore, the central axes (which are the central axes of, for example, rods 27a) of respective support portions 8, the central axes (which are the central axes of, for example, coils 21) of respective driving portions 7, and the central axis (in other words, the central axis of air-slider outer frame 1) of air-slider hollow shaft 2 are arranged parallel to one another. Accordingly, when viewed from air-slider hollow shaft 2, each support arm 5 has a configuration in which support portion 8 is disposed outside driving portion 7. Two support portions 8 support the dead weights of air-slider hollow shaft 2, probe portion 3, focus optical system 4, and two driving portions 7 movably in the lateral direction.

Respective support portions 8 are slide support portions which allow two support arms 5 to move in a plane perpendicular to the up-down direction (that is, the Z-axis direction) and be inclined with respect to the up-down direction (that is, Z-axis direction). In other words, respective support portions 8 support two support arms 5 movably and tiltably in two axial directions (which are the X-axis direction and the Y-axis direction) perpendicular to each other and perpendicular to the up-down direction (that is, the Z-axis direction). Accordingly, it is possible to reduce a deformation force which acts on air-slider hollow shaft 2 due to influence of heat or the like. In other words, two support arms 5 protrude from both sides of air-slider hollow shaft 2, driving portion 7 is disposed at a central position of each support arm 5, and thus the configuration of a cross shape is achieved. In addition, two support portions 8 of two support arms 5 are slidable in a lateral (transverse) direction. Therefore, a force in the lateral direction is not applied to support arm 5, and thus a force causing air-slider hollow shaft 2 to be bent does not act on air-slider hollow shaft 2 through support arm 5. Accordingly, air-slider hollow shaft 2 can move in only the up-down direction and a rotational moment is not applied to a part around the gravity center of the air-slider hollow shaft 2. As a result, it is possible to prevent a rotational movement of the tip end of the probe portion.

Specifically, each support portion 8 has air cylinder 27, air pad 28, and spherical bearing portion 29. Air cylinder 27 is an example of a support actuator which vertically movably supports each support arm 5. Casing 27c of air cylinder 27 is fixed to, for example, surface plate 110 of three-dimensional shape measurement apparatus 100. Air pad 28 is connected and fixed to the upper end of rod 27a of air cylinder 27, via spherical bearing portion 29. Spherical bearing portion 29 includes base stand 29a and sphere 29b. Base stand 29a is provided with a hemisphere surface concave portion in the upper surface thereof. Sphere 29b is pivotable in the hemisphere surface concave portion. Base stand 29a is fixed to the upper end of rod 27a. A lower surface of air pad 28 is connected to sphere 29b. Accordingly, air pad 28 is supported by spherical bearing portion 29 tiltably around the Z axis by 360 degrees with respect to the upper end of rod 27a. An upper surface of air pad 28 is disposed so as to face lower surface 5b which is a flat surface of support receiving portion 5a. Support receiving portion 5a is located in a tip end of support arm 5 and has an inverted L shape.

Air pad 28 is provided with a plurality of air injection holes 28a in the surface thereof. First air supply source 41 supplies air to air suction port 28b of air pad 28 at a constant pressure and the air is injected from a plurality of air injection holes 28a to lower surface 5b of support receiving portion 5a, thereby air gap portion 30 of a small size is provided between air pad 28 and lower surface 5b of support receiving portion 5a. In other words, a light gap (in other words, air gap portion 30) is provided between air pad 28 and flat lower surface 5b of support receiving portion 5a of the tip end of each support arm 5 by the pressure of air which is injected from air injection holes 28a of air pad 28 to flat lower surface 5b of support receiving portion 5a of the tip end of each support arm 5. Accordingly, each support portion 8 supports each support arm 5 movably in a transverse direction. According to the configuration described above, sliding resistance in air gap portion 30 in a horizontal direction is significantly small. As a result, in each support portion 8, a force in the horizontal direction is hardly generated between support portion 8 and support arm 5. Sphere 29b of spherical bearing portion 29 is pivotally supported between air pad 28 and base stand 29a of spherical bearing portion 29. Thus, when air pad 28 is inclined, the inclination of air pad 28 can be absorbed. Two first air supply sources 41 may not be provided and one common first air supply source 41 may be provided.

Furthermore, air bearing 27b which functions as an example of a piston is fixed to a lower end of rod 27a of air cylinder 27. Air bearing 27b can slide along the axial direction of rod 27a in casing 27c of air cylinder 27. Between air bearing 27b and casing 27c, air is supplied from second air supply source 42 to inner space 27d under the control of control valve 43. Accordingly, a pair of air cylinders 27 are driven and respective rods 27a are moved in the up-down direction, so that a pair of support arms 5 are supported in a state where support arms 5 are maintained at predetermined vertical positions. Accordingly, a pair of air cylinders 27 support a pair of support arms 5, over the entirety of strokes of rods 27a, at a constant force. Rod 27a can move, in the up-down direction, from casing 27c of air cylinder 27. A portion between casing 27c of air cylinder 27 and rod 27a is supported by air gap 27e. Thus, between casing 27c and rod 27a, sliding resistance in the up-down direction and sliding resistance in a rotation direction around an axis are significantly small. The operations of second air supply source 42 and control valve 43 are also controlled by control portion 90. Two second air supply sources 42 may not be provided and one common second air supply source 42 may be provided.

Each support portion 8 is disposed on the outermost side of each support arm 5, as described above. In contrast, when it is assumed that each driving portion 7 is disposed in each support arm 5, in a manner that driving portion 7 is located further on the outer side than support portion 8, in some cases, a thrust difference occurs between right driving portion 7 and left driving portion 7, for example, between right linear motor 20 and left linear motor 20. In this case, when a distance from air-slider hollow shaft 2 to the central axis of right linear motor 20 and a distance from air-slider hollow shaft 2 to the central axis of left linear motor 20 are long, bending moment increases. Accordingly, it is preferable that the arrangement positions of right linear motor 20 and left linear motor 20 are set to be as close as possible to air-slider hollow shaft 2. In addition, it is preferable that the arrangement position of support portion 8 is set to be as close as possible to air-slider hollow shaft 2. Such arrangement described above also contributes to increase the rotational rigidity of air-slider hollow shaft 2.

According to the configuration described above, under the control of control portion 90, air cylinders 27 of two support portions 8 cause Z-axis stage portion 101 having probe portion 3 to be moved to an initial position at which Z-axis stage portion 101 is located close to measuring object 103 which is mounted and held on XY stage 102. Then, air-slider hollow shaft 2 is supported by two support portions 8, through two support arms 5. Subsequently, measuring of a three dimensional shape of measuring object 103 is performed as follows. Control portion 90 controls linear motors 20 of two driving portions 7 , so that probe portion 3 comes into contact with a measuring surface of measuring object 103 and scans measuring object 103 at a predetermined scanning speed.

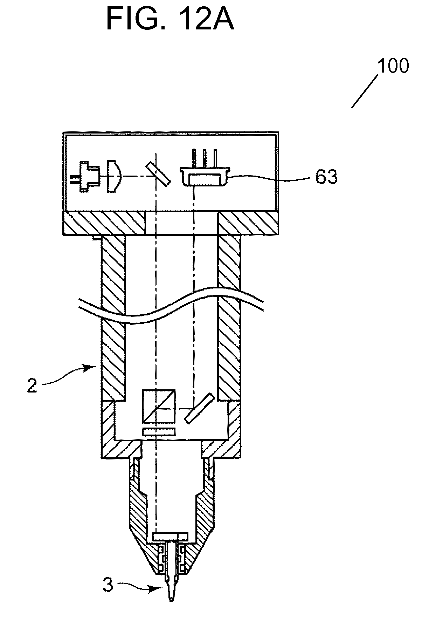

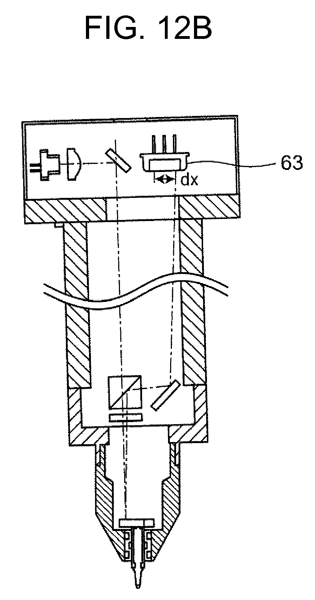

Upon comparison between three-dimensional shape measurement apparatus 100 of the embodiment and an apparatus of the non patent literature 1, presence or absence of error in inclination measurement optical system 10 due to presence or absence of bending of air-slider hollow shaft 2 is described in Figs. 12A and 12B.

Fig. 12A shows only air-slider hollow shaft 2 of three-dimensional shape measurement apparatus 100 of the embodiment. In Fig. 12A, when air-slider hollow shaft 2 is driven in the up-down direction, a rotational moment is not applied to air-slider hollow shaft 2 and a bending force is not applied to the optical system of air-slider hollow shaft 2. As a result, bending of air-slider hollow shaft 2 does not occur and, also, error in inclination measurement optical system 10 does not occur.

In contrast, Fig. 12B illustrates a comparative case in which Z-axis driving shaft 220 of the apparatus of non patent literature 1 is replaced with the air-slider hollow shaft. When the air-slider hollow shaft is driven in the up-down direction, a rotational moment is applied to the air-slider hollow shaft and a bending force is applied to an optical system of the air-slider hollow shaft. Accordingly, bentness protruding to the right direction occurs in the air-slider hollow shaft itself. As a result, error dx occurs in light receiving element 63 for inclination measurement optical system of inclination measurement optical system 10, compared to the case of Fig. 12A.

As described above, in three-dimensional shape measurement apparatus 100 of the embodiment, when air-slider hollow shaft 2 is driven in the up-down direction, a rotational moment is not applied to air-slider hollow shaft 2 and a bending force is not applied to the optical system of air-slider hollow shaft 2. When three-dimensional shape measurement apparatus 100 does not have the configuration described above, error occurs in the inclination measurement optical system, and thus it is not possible to perform measuring with high accuracy.

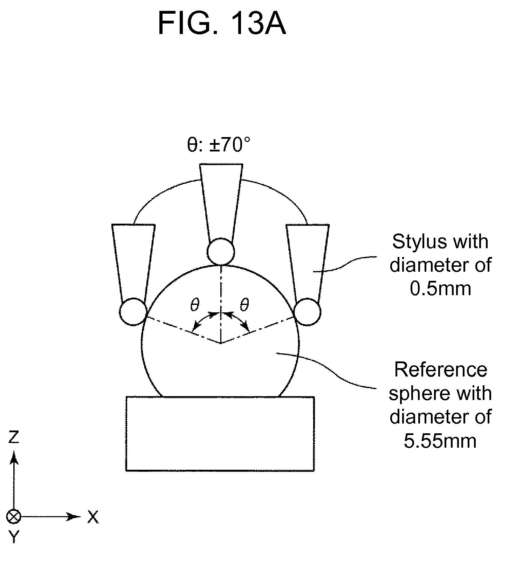

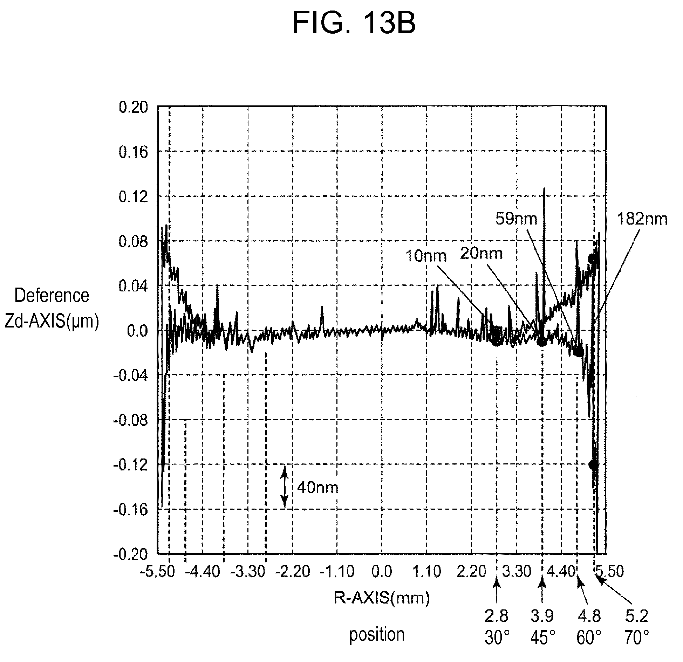

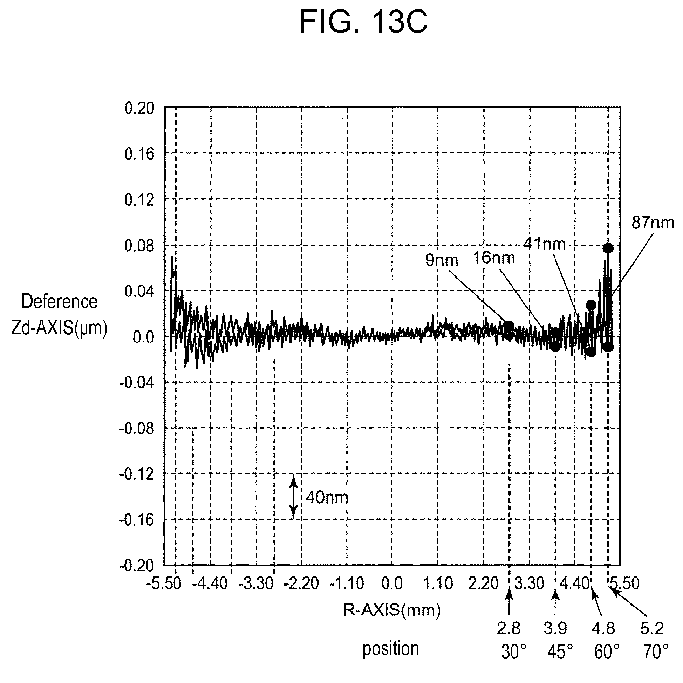

Fig. 13B illustrates a case in which a probe portion of the three-dimensional shape measurement apparatus (which is the three-dimensional shape measurement apparatus according to Japanese Patent No. 3000819) of the related art is used in an actual measurement example. Fig. 13C illustrates a case in which probe portion 3 of three-dimensional shape measurement apparatus 100 of the embodiment is used in an actual measurement example. In other words, Figs. 13B and 13C show graphs which illustrate a difference (in other words, measurement accuracy of three-dimensional shape measurement apparatus 100) between measurement data and values by a design formula, when an X-axis reciprocal scanning measurement is performed on a reference sphere which has a radius of 5.55 mm and is illustrated in Fig. 13A, from -70-degree inclination to +70-degree inclination, at a scanning speed of 1.2 mm/sec. The vertical axis of each graph shows a difference between the measurement data and the values by the design formula and the horizontal axis thereof shows a position in the X-axis direction. In the case of the three-dimensional shape measurement apparatus of the related art, variation of error of 59 nm occurs at 60-degree inclination, as illustrated in Fig. 13B. However, in the case of three-dimensional shape measurement apparatus 100 of the embodiment, the amount of the variation of the error at 60-degree inclination is reduced to 41 nm, as illustrated in Fig. 13C. Furthermore, in the case of the three-dimensional shape measurement apparatus of the related art, variation of error of 182 nm occurs at 70-degree inclination. However, in the case of three-dimensional shape measurement apparatus 100 of the embodiment, the amount of the variation of the error at 70-degree inclination is reduced to 87 nm. In the configuration of the three-dimensional shape measurement apparatus of the related art, a lower end of a stylus has a spherical surface shape having various radiuses of curvature. In addition, the stylus scans the measuring object with a small measuring force of 10 mgf to 100 mgf and the stylus moves upward or downward along the shape of the measuring object. The three-dimensional shape measurement apparatus of the related art is an apparatus in which, when the stylus moves upward or downward, the entirety of an optical probe is moved upward or downward in accordance with driving of a focus servo, and thus an object lens always comes into focus onto a mirror.

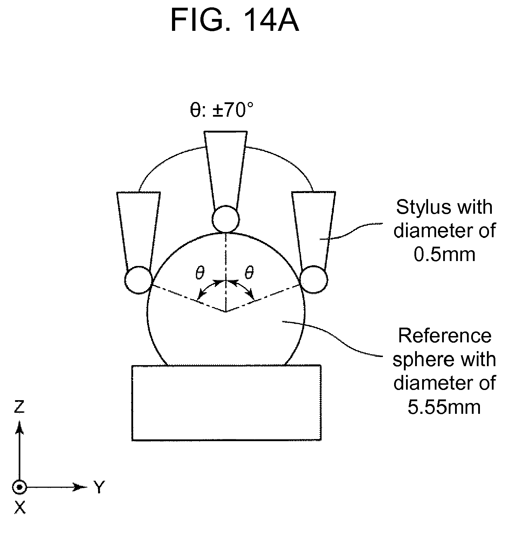

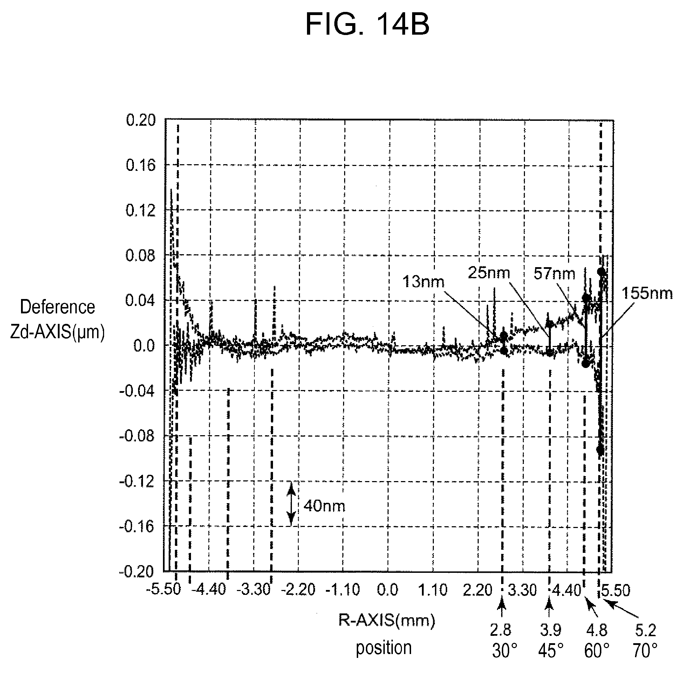

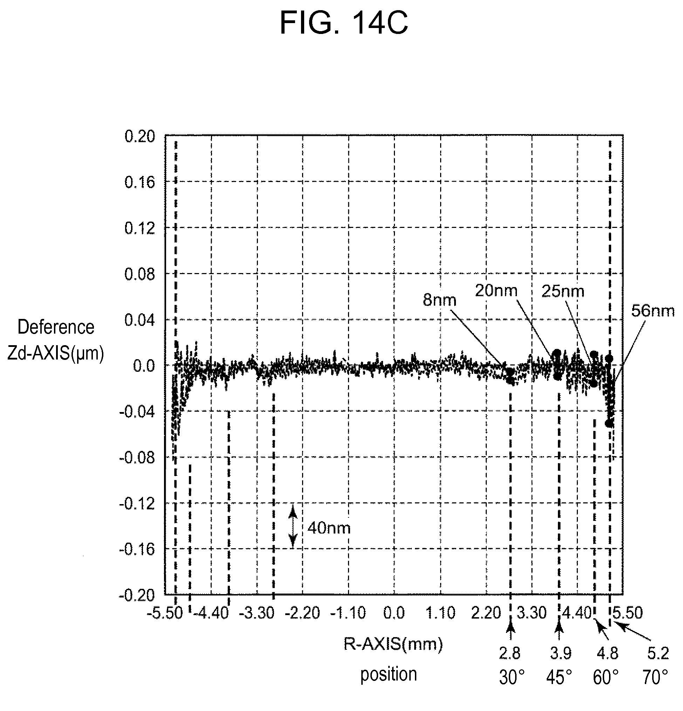

Similarly, Fig. 14B illustrates a case in which the probe portion of the three-dimensional shape measurement apparatus of the related art is used. Fig. 14C illustrates a case in which probe portion 3 of three-dimensional shape measurement apparatus 100 of the embodiment is used. Figs. 14B and 14C show graphs which illustrate a difference (in other words, measurement accuracy of the measurement device) between measurement data and values by the design formula, when a Y-axis reciprocal scanning measurement is performed on a reference sphere which has a radius of 5.55 mm and is illustrated in Fig. 14A, from -70-degree inclination to +70-degree inclination, at a scanning speed of 1.2 mm/sec. The vertical axis of each graph shows a difference between the measurement data and the values by the design formula and the horizontal axis thereof shows a position in the Y-axis direction. In the case of the three-dimensional shape measurement apparatus of the related art, variation of error of 57 nm occurs at 60-degree inclination, as illustrated in Fig. 14B. However, in the case of three-dimensional shape measurement apparatus 100 of the embodiment, the amount of the variation of the error at 60-degree inclination is reduced to 25 nm, as illustrated in Fig. 14C. Furthermore, in the case of the three-dimensional shape measurement apparatus of the related art, variation of error of 155 nm occurs at 70-degree inclination. However, in the case of three-dimensional shape measurement apparatus 100 of the embodiment, the amount of the variation of the error at 70-degree inclination is reduced to 56 nm.

As a result, it is possible to understand that, when scanning measurement is performed at the scanning speed of 1.2 mm/sec, variation in measurement accuracy of the order of 100 nm occurs in the apparatus of the related art, and the amount of the variation in measurement accuracy is reduced to the order of 10 nm in three-dimensional shape measurement apparatus 100 of the embodiment.

In the measurement examples described above, measuring force of 30 mgf is applied to both the probe portion of the three-dimensional shape measurement apparatus of the related art and probe portion 3 of three-dimensional shape measurement apparatus 100 of the embodiment.

According to the embodiment described above, the following effects can be obtained.

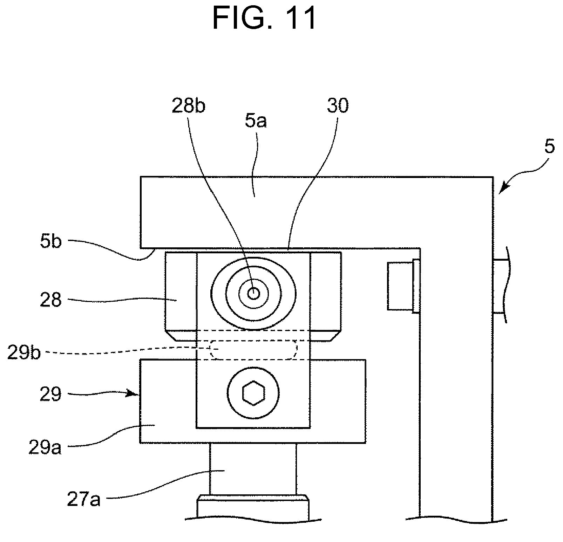

First, it is assumed that, in the apparatus of the non patent literature 1 described in the background art, probe portion 201 cannot be moved at high speed in an area of a large inclination angle (which is set to the angle of 30 degrees to 70 degrees) required for, for example, a lens as an example of measuring object 203. Accordingly, in the case of Fig. 11 of the non patent literature 1, there are 18 degrees of the maximum inclination angle and probe portion 201 scans a measuring object at a low speed of 0.02 mm/s for measuring the measuring object. The reason for this is as follows. When probe portion 201 is moved at a speed faster than 0.02 mm/s, diaphragm 230 is deformed. As a result, the tip end of probe portion 201 is inclined, and thus measurement error of ΔX1 occurs. Furthermore, in this case, vibrational noises also easily occur. When probe portion 201 is moved at a still higher speed, the tip end of the probe portion or diaphragm 230 may be damaged. When probe portion 201 is damaged, an impulsive force is also strongly applied to measuring object 203, and thus measuring object 203 may be damaged. As a result, in the case of the apparatus of the non patent literature 1, it is significantly difficult to perform scanning measurement of the order of mm/s, which is required for a production line of a lens.

Furthermore, the apparatus of the non patent literature 1 has a configuration in which non-contact sealing portion 210 constituted by vacuum cylinder 204 and hydrostatic gas bearing 211 are arranged in series as two separate members. When an optimal gap is ensured, the maximum rigidity of hydrostatic gas bearing 211 is ensured. However, when axial displacement (of the level of several micrometers) occurs in Z-axis driving shaft 220, with respect to both non-contact sealing portion 210 and hydrostatic gas bearing 211, Z-axis driving shaft 220 is bent to one side. Accordingly, the rigidity of Z-axis driving shaft 220 is reduced, and thus the rotational rigidity of Z-axis driving shaft 220 is reduced. As a result, measurement errors easily occur in the tip end of the probe portion, at a large inclination angle (the angle from 30 degrees to 70 degrees). Therefore, in the case of Fig. 11, it is assumed that scanning measurement is performed at a low speed of 0.02 mm/s, similarly to the case described above. When measurement is performed at a speed faster than that of the case described above, rotational vibration of Z-axis driving shaft 220 becomes intense in hydrostatic gas bearing 211. Accordingly, vibrational noise increases at the time of measurement or a portion in the vicinity of probe portion may be damaged. For the above-mentioned reason, in the case of the apparatus of the non patent literature 1, it is significantly difficult to perform measurement of the order of mm/s, which is required for a production line of a lens.

Furthermore, an aspherical lens used for a smart phone or the like requires shape accuracy in which the amount of error is within the range of 100 nm or less in the large inclination angle range up to 70 degrees, in addition to measurement of the order of mm/s. Three-dimensional shape measurement apparatus 100 of the embodiment of the invention can be used as a device which satisfies such a scanning speed and measurement accuracy described above. In other words, three-dimensional shape measurement apparatus 100 of the embodiment has the following configurations. Thus, three-dimensional shape measurement apparatus 100 can scan and measure a measuring object with a small measuring force of 0.3 mN or less, a speed of the order of mm/sec, and measurement accuracy and measurement reproducibility of the order of 10 nm in the large inclination angle range up to 70 degrees, so that, when air-slider hollow shaft 2 is driven in the up-down direction, a rotational moment is prevented from being applied to air-slider hollow shaft 2 and a bending force is prevented from being applied to the optical system of air-slider hollow shaft 2.

According to the embodiment, the following configurations are applied to three-dimensional shape measurement apparatus 100, so that, when air-slider hollow shaft 2 is driven in the up-down direction, a rotational moment is prevented from being applied to air-slider hollow shaft 2 and a bending force is prevented from being applied to the optical system of air-slider hollow shaft 2. The configurations are applied to three-dimensional shape measurement apparatus 100, and thus the rotational rigidity of the Z-axis driving shaft (that is, air-slider hollow shaft 2) can be increased and bending of the Z-axis driving shaft (that is, air-slider hollow shaft 2) due to thermal expansion can be prevented.

A configuration in which the central axis of air-slider hollow shaft 2 and the central axis of air-slider outer frame 1 are arranged to be matched to each other. In other words, a configuration in which an offset is not provided between two central axes in an XY plane.

A configuration in which the central axis in the portion between two driving axes (that is, the central axes of coils 21) of two linear motors 20 is matched to the central axis passing through the gravity center of air-slider hollow shaft 2 (that is, an offset is not provided between both central axes), and thus air-slider hollow shaft 2 is driven in the up-down direction by driving two linear motors 20 at the same time using control portion 90, so that a part corresponding to the position of the gravity center of air-slider hollow shaft 2 is moved.

A configuration in which the central axes of focus optical system 4 and probe portion 3 are disposed on the central axis of air-slider hollow shaft 2.

A configuration in which the central axis (which is, for example, the central axis of rod 27a) of each support portion 8, the central axis (which is, for example, the central axis of coil 21) of each driving portion 7, and the central axis (in other words, the central axis of the air-slider outer frame) of air-slider hollow shaft 2 are arranged parallel to one another.

A configuration in which two support arms 5 are disposed, in the lateral direction, at vertical positions corresponding to the integration gravity center of focus optical system 4, probe portion 3, and air-slider hollow shaft 2, coils 21 of linear motors 20 as an example of driving portion 7 are disposed in the central portions of respective support arms 5, and support portions 8 are disposed further on the outer side than coils 21.

The operation effects described above can be obtained by the configurations described above.

When, for example, any configuration described below is applied, the operation effects described above can be more improved.

It is preferable that, in a plan view, the central axis (which is, for example, the central axis of rod 27a) of each support portion 8, the central axis (which is, for example, the central axis of coil 21) of each driving portion 7, and the central axis (in other words, the central axis of the air-slider outer frame) of air-slider hollow shaft 2 are disposed on one straight line. According to the configuration described above, when air-slider hollow shaft 2 is driven in the up-down direction, a rotational moment is more hardly applied to air-slider hollow shaft 2. Accordingly, it is possible to further prevent a bending force to be applied to the optical system of air-slider hollow shaft 2. As a result, it is possible to further more prevent bending of the Z-axis driving shaft (that is, air-slider hollow shaft 2) during driving.

When air-slider hollow shaft 2 is blocked out of a heating element of coil 21 of linear motor 20 by the heat insulating material of air-slider hollow shaft 2 itself (or air-slider hollow shaft 2 itself and support arm 5 itself), thermal expansion of air-slider hollow shaft 2 does not occur. As a result, adverse influence due to thermal expansion is prevented from being applied to the optical system of air-slider hollow shaft 2.

In a case where the position of the gravity center of air-slider hollow shaft 2 or the like is supported movably in the lateral direction by air pads 28 of two support portions 8 through two support arms 5, when air-slider hollow shaft 2 is driven in the up-down direction, air-slider hollow shaft 2 can be moved in the lateral direction by air pads 28 of two support portions 8 even when force in the lateral direction is applied to air-slider hollow shaft 2. As a result, a rotational moment is less likely to be applied to air-slider hollow shaft 2. In addition, it is also possible to prevent a bending force from being applied to the optical system of air-slider hollow shaft 2.

When linear motor 20 is a movable coil type in which coil 21 of each linear motor 20 is supported by support arm 5 and magnet 24 is fixed to air-slider outer frame 1, the magnet having a relatively large weight can be set to a fixed side and the coil having a relatively small weight can be set to a movable side. Accordingly, the weight of a movable portion of linear motor 20 can be reduced. As a result, when air-slider hollow shaft 2 is moved in the up-down direction, even when a force in the lateral direction is applied to air-slider hollow shaft 2, air-slider hollow shaft 2 can be moved in the lateral direction by air pads 28 of two support portions 8. Therefore, a rotational moment is less likely to be applied to air-slider hollow shaft 2. In addition, it is also possible to prevent a bending force from being applied to the optical system of air-slider hollow shaft 2.

The invention is not intended to be limited by the embodiments described above. Various configurations can be applied to the invention.

For example, the following configuration, instead of support portion 8, can be applied to the invention.

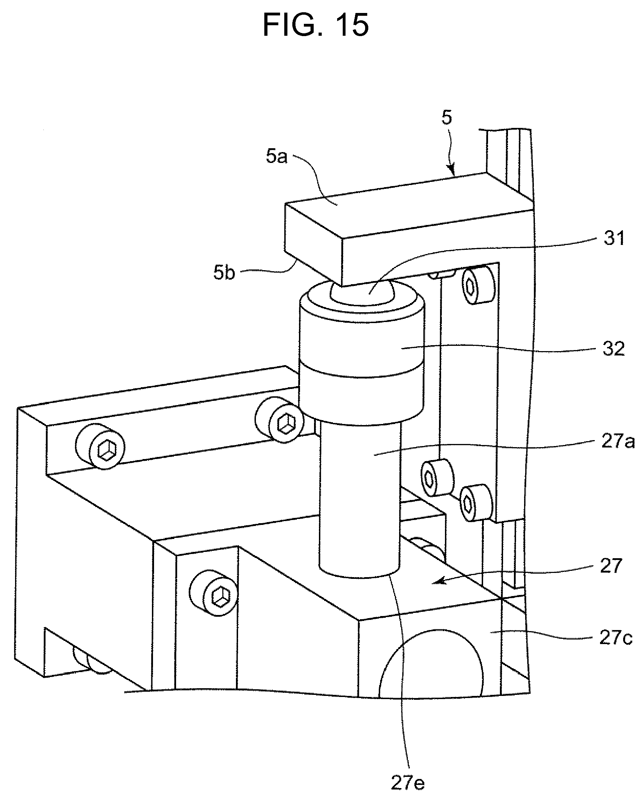

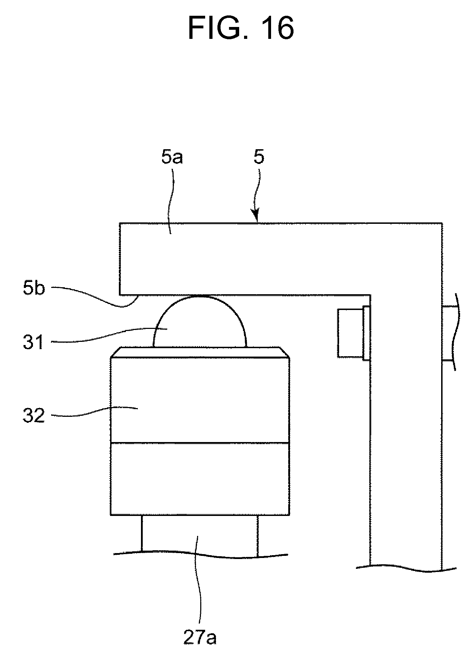

Lower surface 5b of support receiving portion 5a of each support arm 5 may be supported in a state where lower surface 5b is in direct contact with hemisphere support portion 31, as illustrated in Figs. 15 and 16. Specifically, hemisphere support portion 31 is disposed in the upper end of rod 27a via base stand 32, and a top portion of hemisphere support portion 31 is in point contact with lower surface 5b of support receiving portion 5a. Accordingly, each support arm 5 is supported by the top portion of hemisphere support portion 31 pivotably in the front and back direction and movably in the lateral direction, with respect to the top portion of hemisphere support portion 31.

According to the configuration of the modification example described above, the configuration is simplified, compared to that of support portion 8 of the embodiment described above.

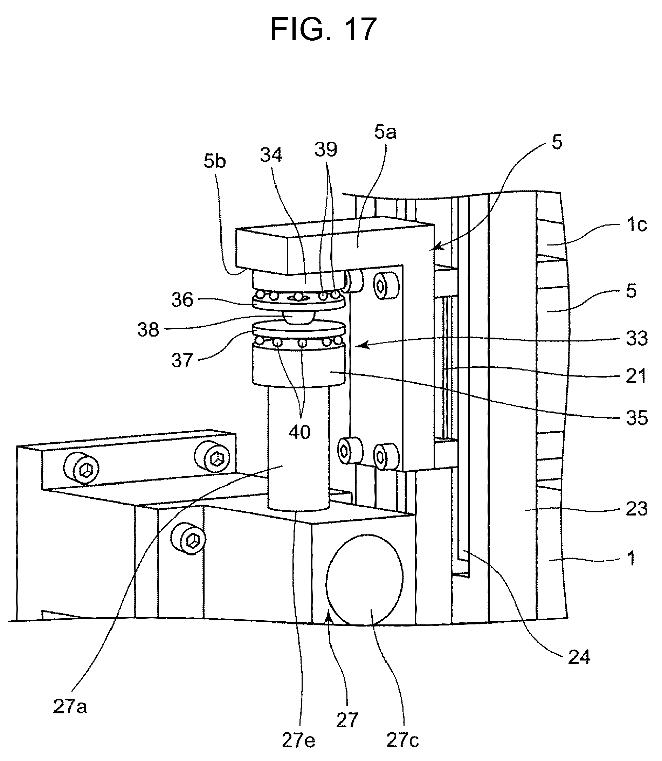

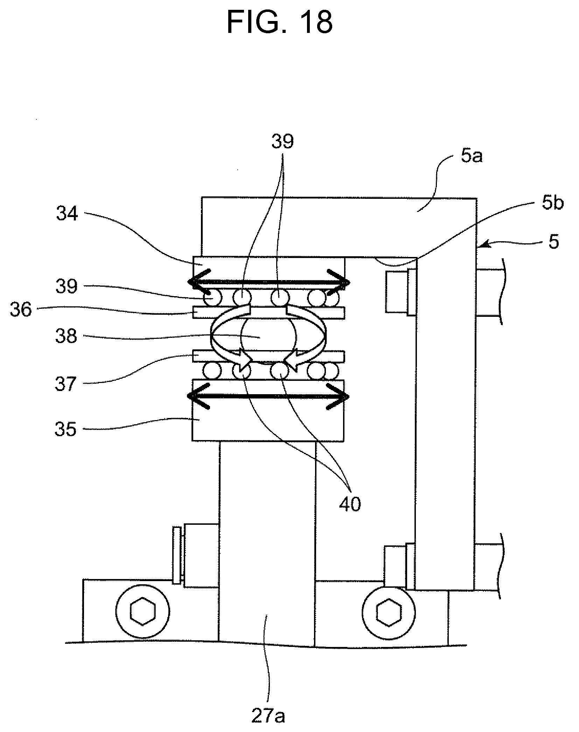

Lower surface 5b of support receiving portion 5a of each support arm 5 may be supported by floating joint 33, as illustrated in Figs. 17 and 18. Specifically, floating joint 33 is constituted of upper bearing 34, upper plate portion 36, middle bearing 38 in a spherical shape, lower plate portion 37, and lower bearing 35 which are disposed in order from the upper side to the lower side. A plurality of balls 39 are rotatably arranged, in a ring shape, in a portion between upper bearing 34 and upper plate portion 36. The upper surface of upper bearing 34 is in contact with lower surface 5b of support receiving portion 5a of each support arm 5. A plurality of balls 40 are rotatably arranged, in a ring shape, in a portion between lower bearing 35 and lower plate portion 37. The lower surface of lower bearing 35 is fixed to the upper end of rod 27a. The upper portion of middle bearing 38 is rotatably accommodated in a hemisphere surface concave portion of the lower surface of upper plate portion 36. The lower portion of middle bearing 38 is rotatably accommodated in a hemisphere surface concave portion of the upper surface of lower plate portion 37. Accordingly, upper bearing 34 and lower bearing 35 can move in the X-axis direction and in the Y-axis direction, and thus sliding resistance is small. When upper plate portion 36 and lower plate portion 37 in a parallel state, between which middle bearing 38 is interposed, are inclined, middle bearing 38 can rotate with respect to upper plate portion 36 and lower plate portion 37. As a result, sliding resistance is small.

According to the configuration of the modification example described above, the parts of support portion 8 may be relatively cheaper than those of support portion 8 of the embodiment described above.

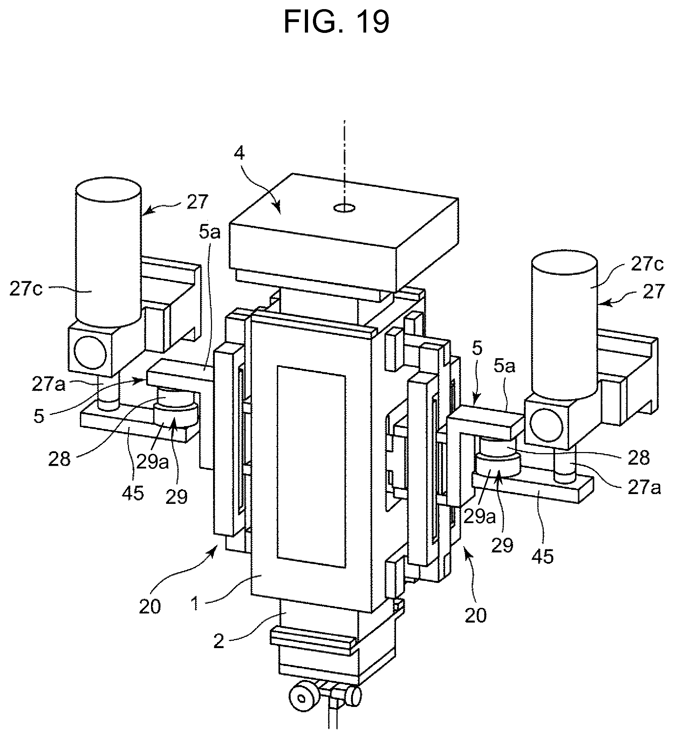

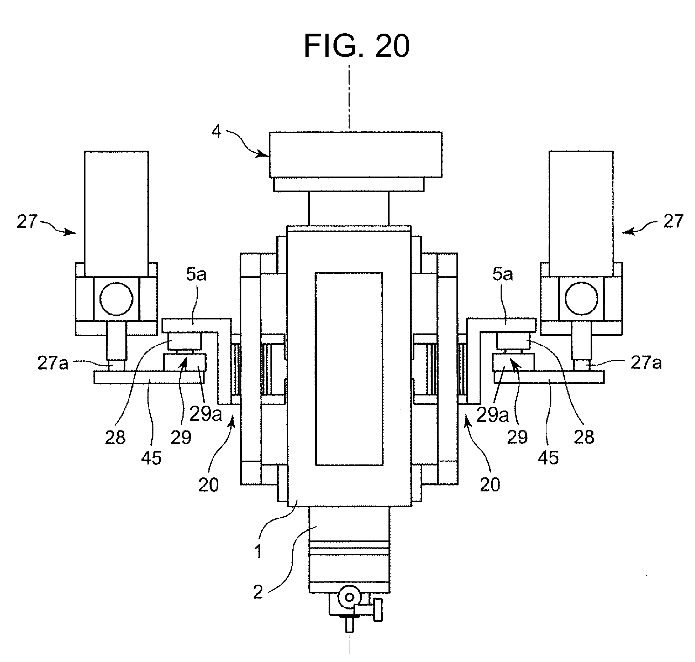

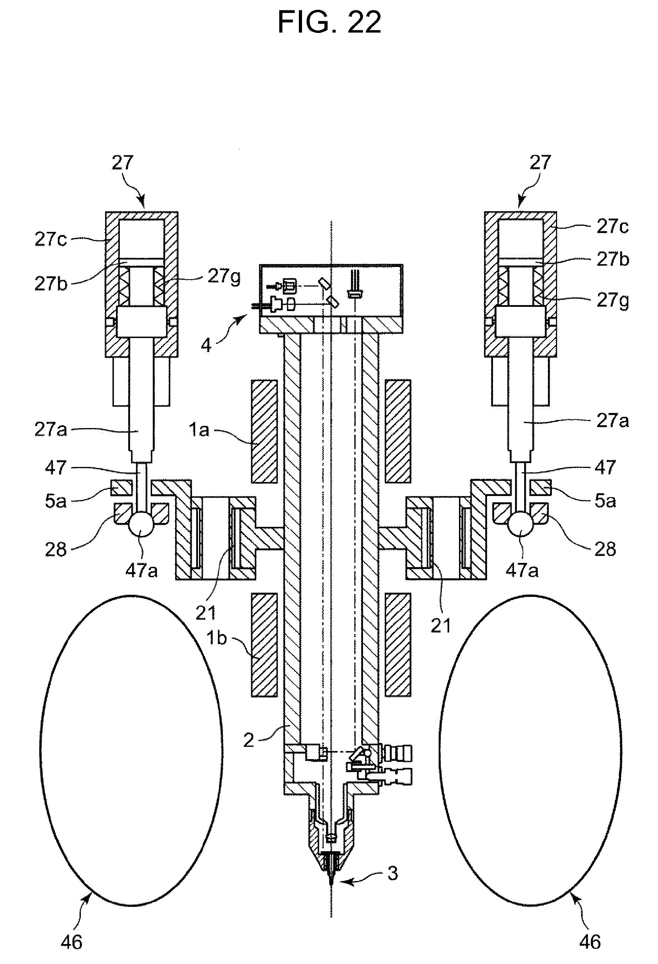

In addition, lower surface 5b of support receiving portion 5a of each support arm 5 may be supported, by an air cylinder, in a pulled-up support manner, as illustrated in Figs. 19 and 20. Specifically, in the configuration of support portion 8, air cylinder 27 which is disposed further on the upper side than each support arm 5 pulls up support arm 5, such that support arm 5 is supported. More specifically, air pad 28 and spherical bearing portion 29 are disposed below lower surface 5b of support receiving portion 5a of each support arm 5, similarly to support portion 8. Upon comparison with support portion 8, the only difference is that base stand 29a of spherical bearing portion 29 is fixed not to the upper end of rod 27a but to one end of connection member 45 having a plate shape. The lower end of rod 27a of air cylinder 27 which is installed upside down is fixed to the other end of connection member 45. Similarly to support portion 8 described above, first air supply source 41 supplies air to air suction port 28b of air pad 28 continuously at a constant pressure and the air is injected from air injection holes 28a to lower surface 5b of support receiving portion 5a. Air gap portion 30 of a small size is thus provided in a portion between air pad 28 and lower surface 5b of support receiving portion 5a. Air pad 28 and spherical bearing portion 29 function the same as support portion 8 described above and have the same operation effects. In this modification example, air is supplied, by being controlled by control valve 43, from second air supply source 42 to inner space 27g (which is the inner space below air bearing 27b, see Fig. 22) between air bearing 27b and casing 27c. Accordingly, a pair of air cylinders 27 are driven and the respective rods 27a are moved in the up-down direction. Accordingly, a pair of support arms 5 are supported through connection member 45, in a state where the positions of support arms 5 are maintained at predetermined vertical positions.

According to the configuration of the modification example described above, it is possible to obtain the same operation effects as those of support portion 8 of the embodiment described above. Furthermore, a pair of air cylinders 27 are not disposed below a pair of support arms 5 and large space 46 (see Fig. 22) is ensured, and thus a degree of freedom in loading/unloading of a measuring object, movement of a measuring object, and the like is increased without any obstructive member. In addition, it is possible to allow rod 27a of air cylinder 27 to be long, as illustrated in Fig. 22. As a result, it is also possible to increase the amount of vertical movement of rod 27a by air cylinder 27.

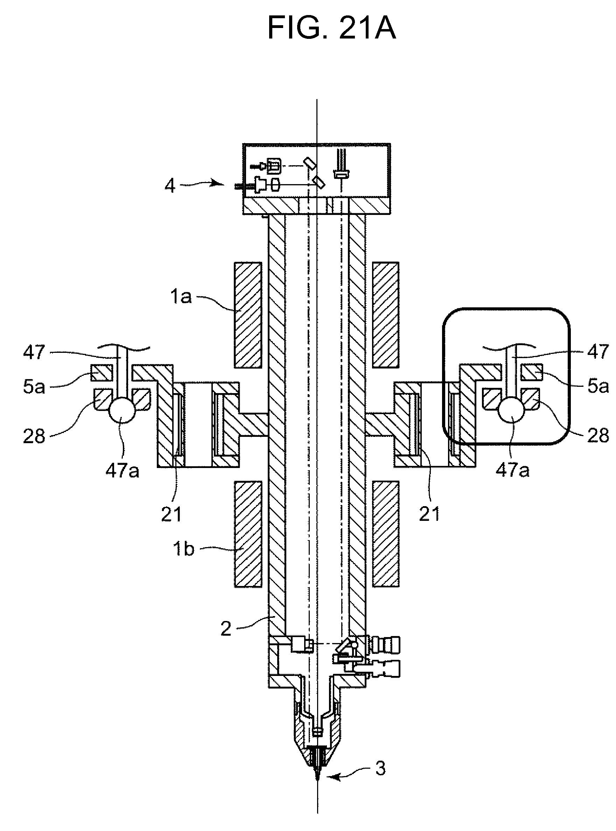

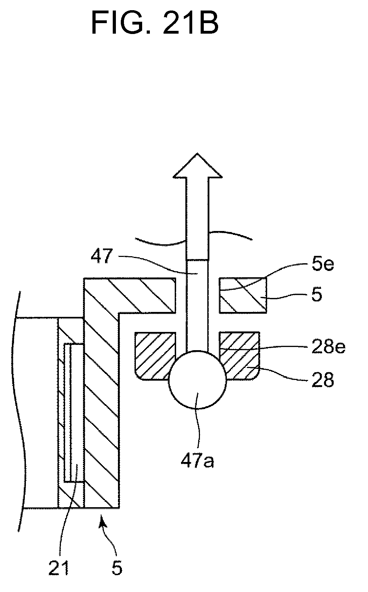

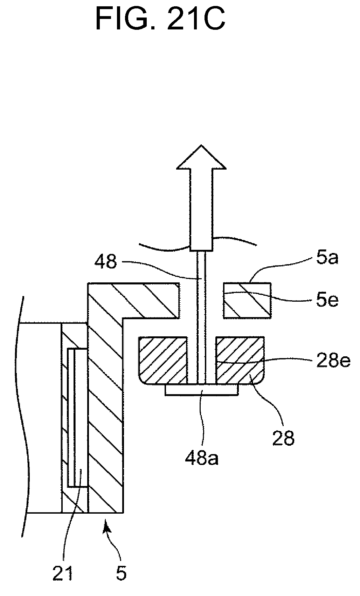

In the modification example described above, the end portion of support receiving portion 5a of each support arm 5 and the actuator of each support portion 8 may be directly connected without connection member 45. Through-hole 5e, for example, is formed in the end portion of support receiving portion 5a and through-hole 28e is also formed in air pad 28, as illustrated in Figs. 21A to 21C. Shaft member 47 having locking portion 47a on the lower end or wire 48 having locking portion 48a on the lower end passes through through-holes 5e and 28e. The upper end of shaft member 47 or wire 48 is connected to the driving shaft, for example, rod 27a of air cylinder 27, of the actuator. In this configuration, when the actuator is driven, air pad 28 is moved in the up-down direction by shaft member 47 or wire 48, thus the end portion of support receiving portion 5a of each support arm 5 may be supported via air pad 28. For example, an oil-hydraulic cylinder, a counter weight, a linear motor, and a voice coil motor, other than an air cylinder, can be used as the actuator.

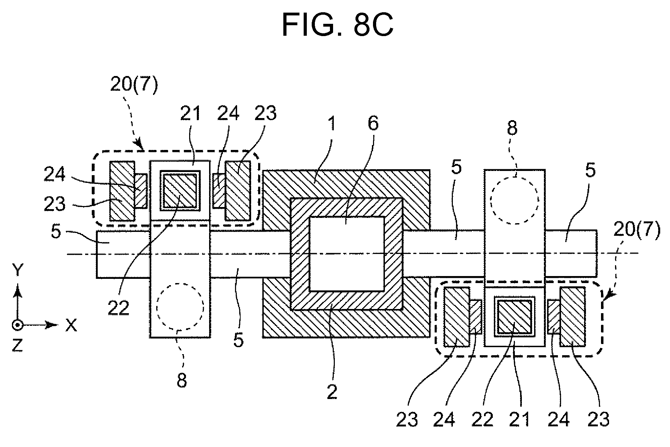

In each support arm 5, support portion 8 is located further away from air-slider hollow shaft 2 than driving portion 7. However, the configuration is not limited thereto. For example, the positional relationship between support portion 8 and driving portion 7 may be reversed, and thus, in each support arm 5, driving portion 7 may be located further away from air-slider hollow shaft 2 than support portion 8. In each support arm 5, instead of the arrangement described above, support portion 8 and driving portion 7 may be located at positions at which support portion 8 and driving portion 7 are away from air-slider hollow shaft 2 by the same distance, as illustrated in Fig. 8C.

Any embodiments or modification examples of various embodiments or modifications described above may be appropriately combined. In this case, it is possible to obtain the respective effects thereof.

As described above, the three-dimensional shape measurement apparatus of the invention can prevent bending of the Z-axis driving shaft (that is, the air-slider hollow shaft) due to a force in the lateral direction and thermal expansion and can measure a three-dimensional shape with high accuracy. Therefore, the three-dimensional shape measurement apparatus of the invention is preferably used for scanning measurement or the like of the three-dimensional shape of a certain measuring object (for example, an aspherical lens used for a smart phone or the like) with high accuracy and a small measuring force.

## Claims

1. A three-dimensional shape measurement apparatus comprising:
an air-slider outer frame (1);
an air-slider hollow shaft (2) in which a focus optical system (4) is disposed on an upper end, a probe portion (3) is disposed on a lower end, a through-hole is provided to form an optical path connecting the focus optical system and the probe portion, a central axis is matched to a central axis of the air-slider outer frame, and central axes of the focus optical system and the probe portion are arranged on the central axis, the air-slider hollow shaft being disposed movably in an axial direction in the air-slider outer frame;
two support arms (5) which protrude from both sides of the air-slider hollow shaft in a lateral direction symmetric with respect to the central axis of the air-slider hollow shaft, at vertical positions corresponding to an integration gravity center of the focus optical system, the probe portion, and the air-slider hollow shaft;
two driving portions (7) which are located, in the support arms, at positions in the vicinity of the air-slider hollow shaft, symmetric with respect to the central axis of the air-slider hollow shaft, and which drive, in the axial direction with respect to the air-slider outer frame, the air-slider hollow shaft with aid of the two support arms; and
two support portions (8) which are disposed, associating with the support arms, symmetric with respect to the central axis of the air-slider hollow shaft, and support dead weights of the air-slider hollow shaft, the probe portion, the focus optical system, and the two driving portions.

2. The three-dimensional shape measurement apparatus of Claim 1,
wherein, in each of the support arms, each of the support portions is disposed at a position further away from the air-slider hollow shaft than each of the driving portions.

3. The three-dimensional shape measurement apparatus of Claim 1,
wherein the air-slider hollow shaft is formed of a heat insulating material.

4. The three-dimensional shape measurement apparatus of Claim 1,
wherein each of the support portions includes:
a support actuator which supports respective one of the support arms movably in an up-down direction, and
an air pad which is connected to a tip end of a rod of the support actuator, is disposed facing a lower surface of the respective one of the support arms, and supports the respective one of the support arms movably in the lateral direction, in a non-contact manner through air injected from an air injection port to a lower surface of the respective one of the support arms, and
wherein, in a plan view, the central axis of the rod of each of the support portions, the central axis of each of the driving portions, and the central axis of the air-slider hollow shaft are arranged on one straight line.

5. The three-dimensional shape measurement apparatus of Claim 1,
wherein each of the driving portions is a movable coil type which includes:
a coil for a linear motor which is disposed in respective one of the support arms and is movable in the axial direction of the air-slider hollow shaft, integrally with the respective one of the support arms and the air-slider hollow shaft, and
a magnet for the linear motor which is fixed to the air-slider outer frame and is surrounded by the coil for the linear motor,
wherein the central axis of the air-slider hollow shaft, a central axis of the coil for the linear motor and a central axis of the magnet of the linear motor are parallel to one another and a central axis between the central axes of two of the coils for the linear motor is matched to a central axis passing through a gravity center of the air-slider hollow shaft, and
wherein a central axis of each of the support portions, a central axis of each of the driving portions, and the central axis of the air-slider hollow shaft are arranged parallel to one another.

6. The three-dimensional shape measurement apparatus of Claim 1 further comprising:
air bearing portions provided in the air-slider outer frame at vertical positions between which a position of the integration gravity center of the focus optical system, the probe portion, and the air-slider hollow shaft is interposed,
wherein the air bearing portions support, in a non-contact manner, the air-slider hollow shaft movably in an up-down direction, with respect to the air-slider outer frame.

7. The three-dimensional shape measurement apparatus of Claim 1,
wherein the support arm is formed of a heat insulating material.

8. The three-dimensional shape measurement apparatus of Claim 1,
wherein the focus optical system is formed of an optical system which has, at least, a He-Ne laser device.

9. The three-dimensional shape measurement apparatus of Claim 1,
wherein an inclination measurement optical system is also provided in a space of an optical path of the focus optical system.

## Patentansprüche

1. Vorrichtung zur Messung dreidimensionaler Formen, aufweisend:
einen Luftschieber-Außenrahmen (1);
eine Luftschieber-Hohlwelle (2), in der ein optisches Fokussystem (4) auf einem oberen Ende angeordnet ist, wobei ein Sondenteil (3) auf einem unteren Ende angeordnet ist, ein Durchgangsloch zum Bilden eines das optische Fokussystem mit dem Sondenteil verbindenden optischen Pfads bereitgestellt ist, eine Mittelachse auf eine Mittelachse des Luftschieber-Außenrahmens abgestimmt ist, und die Mittelachsen des optischen Fokussystems und des Sondenteils auf der Mittelachse angeordnet sind, wobei die Luftschieber-Hohlwelle in einer Axialrichtung beweglich im Luftschieber-Außenrahmen angeordnet ist;
zwei Tragarme (5), die von beiden Seiten der Luftschieber-Hohlwelle in einer seitlichen Richtung, symmetrisch in Bezug auf die Mittelachse der Luftschieber-Hohlwelle vorstehen, in senkrechten Positionen entsprechend einem integrierten Schwerpunkt des optischen Fokussystems und der Luftschieber-Hohlwelle;
zwei Antriebsteile (7), die in den Tragarmen, an Positionen in der Nähe der Luftschieber-Hohlwelle symmetrisch im Verhältnis zur Mittelachse der Luftschieber-Hohlwelle angeordnet sind, und die in Bezug auf die Axialrichtung des Luftschieber-Außenrahmens die Luftschieber-Hohlwelle mithilfe der zwei Tragarme antreiben; und
zwei Stützabschnitte (8), die den Tragarmen zugeordnet im Verhältnis zur Mittelachse der Luftschieber-Hohlwelle symmetrisch angeordnet sind, und die die Eigengewichte der Luftschieber-Hohlwelle, des Sondenteils, des optischen Fokussystems und der zwei Antriebsteile tragen.

2. Vorrichtung zur Messung dreidimensionaler Formen nach Anspruch 1,
wobei in jedem Tragarm jeder der Stützabschnitte in einer Position angeordnet ist, die weiter entfernt von der Luftschieber-Hohlwelle ist als jeder der Antriebsabschnitte.

3. Vorrichtung zur Messung dreidimensionaler Formen nach Anspruch 1,
wobei die Luftschieber-Hohlwelle aus einem wärmeisolierenden Material gebildet ist.

4. Vorrichtung zur Messung dreidimensionaler Formen nach Anspruch 1,
wobei jeder Stützabschnitt Folgendes aufweist:
eine Stützbetätigungsvorrichtung, die die Tragarme jeweils in einer Aufwärts-Abwärts-Richtung beweglich unterstützt, und
ein Luftkissen, das an ein vorderes Ende einer Stange der Stützbetätigungsvorrichtung gekoppelt und so angeordnet ist, dass es gegen eine untere Fläche des jeweiligen Tragarms gerichtet ist und den jeweiligen Tragarm beweglich in seitlicher Richtung berührungslos unterstützt durch Luft, die durch einen Lufteinlass gegen einte untere Fläche des jeweiligen Tragarms eingespritzt wird, und
wobei, in einer Draufsicht, die Mittelachse der Stange von jedem der Stützabschnitte, die Mittelachse von jedem der Antriebsabschnitte und die Mittelachse der Luftschieber-Hohlwelle miteinander fluchten.

5. Vorrichtung zur Messung dreidimensionaler Formen nach Anspruch 1,
wobei jeder der Antriebsabschnitte vom Typ einer beweglichen Spule ist, die Folgendes aufweist:
eine Spule für einen Linearmotor, der im jeweiligen Tragarm angeordnet und in Axialrichtung der Luftschieber-Hohlwelle beweglich ist, integriert mit jeweils einem der Tragarme und der Luftschieber-Hohlwelle, und
einen Magneten für den Linearmotor, befestigt am Luftschieber-Außenrahmen und umgeben von der Spule für den Linearmotor,
wobei die Mittelachse der Luftschieber-Hohlwelle, eine Mittelachse der Spule für den Linearmotor und eine Mittelachse des Magneten des Linearmotors parallel zueinander sind, und eine Mittelachse zwischen den Mittelachsen von zwei der Spulen für den Linearmotor ist abgestimmt auf eine Mittelachse, die durch einen Schwerpunkt der Luftschieber-Hohlwelle geführt ist, und
wobei eine Mittelachse jedes der Stützabschnitte, eine Mittelachse der Antriebsabschnitte und die Mittelachse der Luftschieber-Hohlwelle parallel zueinander angeordnet sind.

6. Vorrichtung zur Messung dreidimensionaler Formen nach Anspruch 1, ferner aufweisend:
Luftlagerabschnitte, bereitgestellt im Luftschieber-Außenrahmen in senkrechten Positionen, zwischen denen eine Position des integrierten Schwerpunkts des optischen Fokussystems, des Sondenteils und der Luftschieber-Hohlwelle angeordnet ist,
wobei die Luftlagerabschnitte die Luftschieber-Hohlwelle im Verhältnis zum Luftschieber-Außenrahmen berührungslos in einer Aufwärts-Abwärts-Richtung beweglich unterstützt.

7. Vorrichtung zur Messung dreidimensionaler Formen nach Anspruch 1,
wobei der Tragarm aus einem wärmeisolierenden Material gebildet ist.

8. Vorrichtung zur Messung dreidimensionaler Formen nach Anspruch 1,
wobei das optische Fokussystem aus einem optischen System gebildet ist, das mindestens eine He-Ne-Laservorrichtung aufweist.

9. Vorrichtung zur Messung dreidimensionaler Formen nach Anspruch 1,
wobei außerdem ein optisches Neigungsmesssystem in einem Raum eines optischen Pfads des optischen Fokussystems bereitgestellt ist.

## Revendications

1. Appareil de mesure de forme tridimensionnelle comprenant :
un bâti externe d'aéroglissière (1) ;
un arbre creux d'aéroglissière (2) dans lequel un système optique de mise au point (4) est disposé sur une extrémité supérieure, une partie de sonde (3) est disposée sur une extrémité inférieure, un trou débouchant est prévu pour former une trajectoire optique raccordant le système optique de mise au point et la partie de sonde, un axe central correspond à un axe central du bâti externe d'aéroglissière, et les axes centraux du système optique de mise au point et de la partie de sonde sont agencés sur l'axe central, l'arbre creux d'aéroglissière étant disposé de manière mobile dans une direction axiale dans le bâti externe d'aéroglissière ;
deux bras de support (5) qui font saillie des deux côtés de l'arbre creux d'aéroglissière dans une direction latérale symétrique par rapport à l'axe central de l'arbre creux d'aéroglissière, dans des positions verticales correspondant à un centre de gravité d'intégration du système optique de mise au point, de la partie de sonde et de l'arbre creux d'aéroglissière ;
deux parties d'entraînement (7) qui sont positionnées, dans les bras de support, dans des positions à proximité de l'arbre creux d'aéroglissière, symétriques par rapport à l'axe central de l'arbre creux d'aéroglissière et qui entraînent, dans la direction axiale par rapport au bâti externe d'aéroglissière, l'arbre creux d'aéroglissière à l'aide des deux bras de support ; et
deux parties de support (8) qui sont disposées, en association avec les bras de support, symétriquement par rapport à l'axe central de l'arbre creux d'aéroglissière, et supportent des poids morts de l'arbre creux d'aéroglissière, de la partie de sonde, du système optique de mise au point et des deux parties d'entraînement.

2. Appareil de mesure de forme tridimensionnelle selon la revendication 1,
dans lequel, dans chacun des bras de support, chacune des parties de support est disposée dans une position plus à distance de l'arbre creux d'aéroglissière que chacune des parties d'entraînement.

3. Appareil de mesure de forme tridimensionnelle selon la revendication 1,
dans lequel l'arbre creux d'aéroglissière est formé avec un matériau thermiquement isolant.

4. Appareil de mesure de forme tridimensionnelle selon la revendication 1,
dans lequel chacune des parties de support comprend :
un actionneur de support qui supporte un bras respectif des bras de support de manière mobile dans une direction ascendante-descendante, et
un coussin d'air qui est raccordé à une extrémité de pointe d'une tige de l'actionneur de support, est disposé en face d'une surface inférieure du bras respectif des bras de support et supporte le bras respectif des bras de support de manière mobile dans la direction parallèle, d'une manière sans contact par le biais de l'air injecté à partir d'un orifice d'injection d'air jusqu'à une surface inférieure du bras respectif des bras de support, et
dans lequel, sur une vue en plan, l'axe central de la tige de chacune des parties de support, l'axe central de chacune des parties d'entraînement et l'axe central de l'arbre creux d'aéroglissière sont agencés sur une ligne droite.

5. Appareil de mesure de forme tridimensionnelle selon la revendication 1,
dans lequel chacune des parties d'entraînement est du type à bobine mobile qui comprend :
une bobine pour un moteur linéaire qui est disposée dans le bras respectif des bras de support et est mobile dans la direction axiale de l'arbre creux d'aéroglissière, de manière solidaire avec le bras respectif des bras de support et l'arbre creux d'aéroglissière, et
un aimant pour le moteur linéaire qui est fixé sur le bâti externe d'aéroglissière et est entouré par la bobine pour le moteur linéaire,
dans lequel l'axe central de l'arbre creux d'aéroglissière, un axe central de la bobine pour le moteur linéaire et un axe central de l'aimant du moteur linéaire sont parallèles entre eux et un axe central entre les axes centraux de deux des bobines pour le moteur linéaire correspond à un axe central passant par un centre de gravité de l'arbre creux d'aéroglissière, et
dans lequel un axe central de chacune des parties de support, un axe central de chacune des parties d'entraînement et l'axe central de l'arbre creux d'aéroglissière sont agencés parallèlement entre eux.

6. Appareil de mesure de forme tridimensionnelle selon la revendication 1 et comprenant en outre :
des parties de palier d'air prévues dans le bâti externe d'aéroglissière dans des positions verticales entre lesquelles une position du centre de gravité d'intégration du système optique de mise au point, de la partie de sonde et de l'arbre creux d'aéroglissière est intercalée,
dans lequel les parties de palier d'air supportent, d'une manière sans contact, l'arbre creux d'aéroglissière de manière mobile dans une direction ascendante-descendante, par rapport au bâti externe d'aéroglissière.

7. Appareil de mesure de forme tridimensionnelle selon la revendication 1,
dans lequel le bras de support est formé avec un matériau thermiquement isolant.

8. Appareil de mesure de forme tridimensionnelle selon la revendication 1,
dans lequel le système optique de mise au point est formé avec un système optique qui a au moins un dispositif de laser He-Ne.

9. Appareil de mesure de forme tridimensionnelle selon la revendication 1,
dans lequel un système optique de mesure d'inclinaison est également prévu dans un espace d'une trajectoire optique du système optique de mise au point.
